# EUROPEAN PATENT SPECIFICATION

(11) **EP 2 114 648 B1**
(45) Date of publication and mention of the grant of the patent: **03.09.2014**
(21) Application number: 07862186.9
(22) Date of filing: 21.11.2007
(51) Int. Cl.: B29B 17/00

(54) **WOOD-PLASTIC COMPOSITES USING RECYCLED CARPET WASTE AND METHODS OF MANUFACTURING**
HOLZ-KUNSTSTOFF-ZUSAMMENSETZUNGEN MIT WIEDERVERWERTETEN TEPPICHRESTEN SOWIE VERFAHREN ZUR HERSTELLUNG
COMPOSITES BOIS-PLASTIQUES À BASE DE DÉCHETS DE TAPIS RECYCLÉS ET PROCÉDÉS DE FABRICATION

(30) Priority: 22.11.2006 US 860872 P; 21.03.2007 US 919335 P
(43) Date of publication of application: 11.11.2009
(73) Proprietor: Material Innovations, LLC, Providence, RI 02903 (US)
(72) Inventor: MANCOSH, Douglas, Warwick, RI 02889 (US); PRZYBYLINSKI, James P., St. Helena, CA 94574 (US); MURDOCK, David E., Dublin, OH 43017 (US)
(74) Representative: Lawrence, John
(86) International application number: PCT/US2007/024313
(87) International publication number: WO 2008/066751

(56) References cited:
- WO-A-2007/084822
- DE-A1- 2 444 420
- DE-A1- 4 338 199
- JP-A- 1 105 096
- US-A- 5 786 279
- US-A1- 2003 075 824
- US-A1- 2007 173 551

## Description

### CROSS REFERENCE TO RELATED APPLICATIONS

This application claims priority to U.S. Provisional Patent Application Serial No. 60/860,872, filed November 22, 2006, entitled "Wood-Plastic Composites Using Recycled Carpet Waste and Systems and Methods of Manufacturing"; and U.S. Provisional Patent Application Serial No. 60/919,335, filed March 21, 2007, entitled "Foamed Wood-Plastic Composites Using Recycled Carpet Waste and Systems and Methods of Manufacturing".

### FIELD OF THE INVENTION

This invention relates to methods for fabricating extruded composites and, more particularly, to wood or natural fiber-plastic composite extrusions that employ recycled carpet waste as a component of the composite.

### BACKGROUND OF THE INVENTION

In the past 25 years, a new type of material has entered the plastics products market. Commonly referred to as wood-plastic composites (WPCs) or plastic composites (PCs), the new materials have been accepted into the building products markets in applications such as outdoor decking and railing, siding, roofing and a variety of other products. The market for the wood-plastic composite has grown and WPCs now are used in automotive products, as well as in the building products sector of the economy.

A wood-plastic composite is a blended product of wood, or other natural fibers, and a thermoplastic material. The products can be produced with traditional plastics processes such as extrusion or injection molding. For example, many building products are produced using extrusion processing similar to conventional plastics processing. The wood and plastics materials are blended before or during the extrusion process.

The wood-plastic composites often compete with wood in the building products market. This sharing of the market requires the WPCs to perform in various applications as much as possible like natural wood. The current WPC materials are most often compounds of wood, or natural fibers, and polyethylene, polypropylene, or polyvinyl chloride (PVC). Presently available WPCs, however, suffer from certain drawbacks. For example, if the composite contains too high or too low of a ratio of plastic to wood, the finished product may not have the desired visual appearance or structural performance characteristics. Such products are less desirable in the marketplace. Additionally, WPCs may be expensive to produce, due to the high cost of the thermoplastic materials used.

US 5786279 discloses a method of making a molded part from recycled used carpets, in which carpet material with at least a proportion of uncleaned used carpets is shredded to form a fiber-like wooly mass, the carpet material containing a thermoplastic binder with a low melting point, for example polypropylene, which can be derived from the used carpets or be added. A proportion of fiber-like wood chips is added to the carpet material and the total mass is compressed to form the molded part or panel at a temperature above the plasticizing point of the thermoplastic binder but below the plasticizing point of any other thermoplastic components of the carpet material.

Published US patent application number 2003/0075824 A1 discloses methods for recycling carpet, for making article with the recycled carpet, and articles made therefrom. In one example, a method comprises melting recycle carpet, reducing the water content of the recycle carpet to 0.5 wt % or less, based on the total weight of the recycle carpet and the water, to form a melt ribbon, and forming pellets from the extruded melt ribbon of the recycle material.

Published German patent application no DE 2444420 A1 discloses a construction material comprising a mixture of a thermoplastic material and a mineral and/or organic filler material, and methods of producing the construction material.

### SUMMARY OF THE INVENTION

The present invention features the use of recycled carpet waste containing polyamides (nylon), polyesters, polypropylene and other materials used in the manufacture of carpeting. The addition of the recycled carpet waste can be accomplished with no deleterious effects on the physical properties of the extruded products. Further, the incorporation of the recycled carpet waste allows for the same extrusion processes and downstream, after the extruder, processes as used for conventional wood-plastic composites. The downstream processes include brushing, molding, cutting, and embossing. Wood-plastic composites that incorporate recycled carpet waste may also be foamed and may be coextruded with a capstock. Additionally, the use of recycled materials decreases the materials cost associated with manufacturing and helps address the environmental impacts of carpet waste that might otherwise end up in a landfill.

In one aspect, the invention provides an extruded composite building material, according to claim 1. In embodiments of the above aspect, the extruded composite includes a foaming agent. In the invention, the base polymer is selected from the group consisting of polyethylene, HDPE, MDPE, LDPE, LLDPE, polypropylene, PVC, and combinations thereof. In still another embodiment, the unseparated processed carpet waste includes a material selected from the group consisting of wool, nylon, polyester, polypropylene, jute, sisal, and combinations thereof. In the invention, the filler material is selected from the group consisting of wood chips, wood flour, wood flakes, sawdust, flax, jute, hemp, kenaf, rice hulls, abaca, and combinations thereof. Certain embodiments include an additive selected from the group consisting of a colorant, a lubricant, a flame retardant, a compatiblizer, a coupling agent, a mold inhibitor, and combinations thereof.

In embodiments of the above aspect, the extruded composite includes about 1 % to about 60 % processed carpet waste, by weight. In another embodiment, the composite includes about 10 % to about 40 % processed carpet waste, by weight. In still another embodiment, the composite has about 15 % to about 25 % processed carpet waste, by weight. In yet another embodiment, the composite has a ratio of the base polymer to the filler material of about 40:60 to about 60:40. Certain embodiments have a ratio of about 45:55.

In embodiments of the above aspect, the unseparated processed carpet waste includes at least one of post-industrial waste and post-consumer waste. In another embodiment, after exposure to 30 days of water submersion testing according to FCQA Water Absorption Test, the composite exhibits water absorption of not more than about 7.0 %, by weight. In still another embodiment, after exposure to 30 days of boiling water submersion testing according to FCQA Water Absorption Test, the composite exhibits water absorption of not more than about 10.0 %, by weight. In yet another embodiment, after exposure to 30 days of water submersion testing according to FCQA Water Absorption Test, the composite exhibits water absorption of not more than about 15.0 %, by weight. Certain embodiments exhibit, after exposure to 30 days of boiling water submersion testing according to FCQA Water Absorption Test, water absorption of not more than about 17.0 %, by weight.

In embodiments of the above aspect, the unseparated processed carpet waste includes at least one of a pelletized carpet waste and a powdered carpet waste, In another embodiment, the composite includes a capstock. In still another embodiment, capstock is selected from the group consisting of acrylonitrile-styrene-acrylate, a PVC compound, and a thermoplastic material. In certain embodiments, the capstock has a thickness of approximately 0.002 in. (0.05 mm) to approximately 0.04 in (1 mm), or a thickness of approximately 0.01 in (0.25 mm). In yet another embodiment, wherein the base polymer is an unseparated processed carpet waste.

In another aspect, the invention related to a method of manufacturing an extruded composite adapted for use as a building material, according to claim 13. In embodiments of the above aspect, the method includes the step of providing a foaming agent. In another embodiment, the method includes the step of forming a void in the mixture during the extruding step. In still another embodiment, the extruded mixture expands into the void while maintaining a substantially constant predetermined extruded profile. In yet another embodiment, the method includes the step of passing the extruded profile through a calibrator. In certain embodiments, the passing step controls at least one of a temperature and a pressure differential environment of the extruded profile to obtain a predetermined foamed composite profile.

In embodiments of the above aspect, the foaming agent includes at least one of an exothermic foaming agent and an endothermic foaming agent. In another embodiment, the foaming agent includes both an exothermic foaming agent and an endothermic foaming agent. In still another embodiment, the base polymer is introduced into the extruder at a first location and the foaming agent is introduced into the extruder at a second location. In yet another embodiment, the base polymer and the foaming agent are introduced into the extruder at a first location. In certain embodiments, the method includes the step of coextruding the mixture and a capstock onto at least a portion of the extrudable mixture through a die to form an extruded profile.

In embodiments of the above aspect, the method includes the step of introducing a foaming agent into the extruder. In another embodiment, the method includes the step of preparing the unseparated processed carpet waste. In still another embodiment, the preparing step includes the substeps of providing waste carpet having a fabric pile and a backing, shredding the waste carpet, separating a contaminant from the fabric pile and the backing, and pelletizing the fabric pile and the backing to form the unseparated processed carpet waste. In yet another embodiment, the method includes the step of powderizing the unseparated processed carpet waste. In certain embodiments, the extruder comprises two screws.

In embodiments of the above aspect, the base polymer is introduced into the extruder upstream of at least one of the processed carpet waste and the filler material. In another embodiment, the base polymer and the unseparated processed carpet waste are introduced to the extruder at a common zone. In still another embodiment, the filler material and the unseparated processed carpet waste are introduced to the extruder at a common zone. In yet another embodiment, the filler material and the additive are introduced to the extruder at a common zone. In certain embodiments, the base polymer includes unseparated processed carpet waste. In another aspect, the invention relates to a composite adapted for use as a building material manufactured in accordance with the methods identified above.

### BRIEF DESCRIPTION OF THE DRAWINGS

Other features and advantages of the present invention, as well as the invention itself, will be more fully understood from the following description of the various embodiments, when read together with the accompanying drawings, in which:
- FIG. 1 is a perspective view of a fiber-plastic composite extrusion fabricated in accordance with one embodiment of the present invention;
- FIG. 2 is a perspective view of a system for forming a fiber-plastic composite extrusion in accordance with one embodiment of the present invention;
- FIG. 3 is a cross-sectional schematic representation of a system for forming a fiber-plastic composite extrusion in accordance with another embodiment of the present invention;
- FIG. 4 is an end view of a co-rotating twin screw extruder used in a system for forming a fiber-plastic composite extrusion in accordance with another embodiment of the present invention;
- FIG. 5 is a perspective view of a Y-block adapter and extrusion die assembly used in a system for forming a fiber-plastic composite extrusion in accordance with another embodiment of the present invention;
- FIG. 6 is a schematic view of a system for recycling carpet for use in a fiber-plastic composite extrusion in accordance with one embodiment of the invention;
- FIG. 7 is a perspective view of a system for forming a fiber-plastic composite extrusion in accordance with another embodiment of the present invention; and
- FIG. 8 is an end view of a co-rotating twin screw extruder used in a system for forming a fiber-plastic composite extrusion in accordance with another embodiment of the present invention.

### DETAILED DESCRIPTION OF THE INVENTION

The new systems and methods can be used to process and combine recycled carpet waste with a fiber-polymer composite mixture to form a wood-plastic composite with equivalent properties at reduced cost.

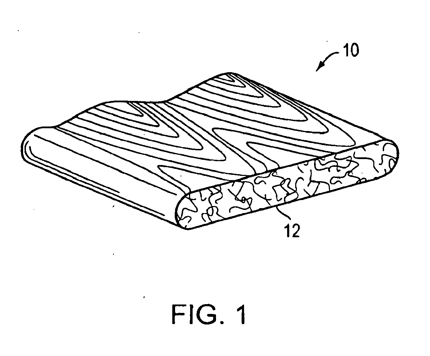

FIG. 1 shows an extruded fiber-plastic composite 10 including recycled carpet waste formed in accordance with the present disclosure. The extruded composite 10 generally comprises a dimensional composite body 12 formed from a mixture including one or more base polymers and natural fibers. The base polymers include polyethylene, HDPE, MDPE, polypropylene, LDPE, LLDPE, PVC, like materials, and combinations thereof. The natural fibers or filler material help to provide the extruded composite 10 with the appearance and feel of a natural wood product. Types of natural fibers, such as wood fillers or the like, include wood chips, wood flour, wood flakes, sawdust, flax, jute, abaca, hemp, kenaf, rice hulls, like materials, and combinations thereof.

The composite 10 also includes unseparated processed carpet waste, which can be blended or dispersed within the fiber-polymer compound, resulting in a WPC of equivalent physical properties. The recycled carpet waste may be processed into a pelletized or powder form from post-industrial or post-consumer carpet waste. Depending on the composition of the carpet used, the recycled carpet waste can include wool, nylon, polyester, polypropylene, jute, sisal, like materials, and combinations thereof. Due at least in part to processing controls, described in greater detail in the following paragraphs, the recycled carpet waste is dispersed and distributed throughout the extruded compound. Additionally, the composite 10 may include additives such as colorants, lubricants, flame retardants, mold inhibitors, compatiblizers, coupling agents, other materials, and combinations thereof. The composite may also include chemical foaming agents and may be capstocked. The relative amounts of components (i.e., filler, base polymer, recycled carpet waste, additives, etc.) may be modified as desired for a particular application. The various component amounts, ratios of components, and finished composite properties, are described in more detail below.

Unless otherwise noted, the use of one material when describing a particular application, process, or embodiment does not limit the described application, process, or embodiment to the specific material identified. The materials may be used interchangeably, in accordance with the described teachings herein. Additionally, the terms recycled carpet waste, carpet waste, processed carpet waste, WPCs, PCs, and variations thereof are used interchangeably to described unseparated processed carpet waste and products made therefrom, as described herein.

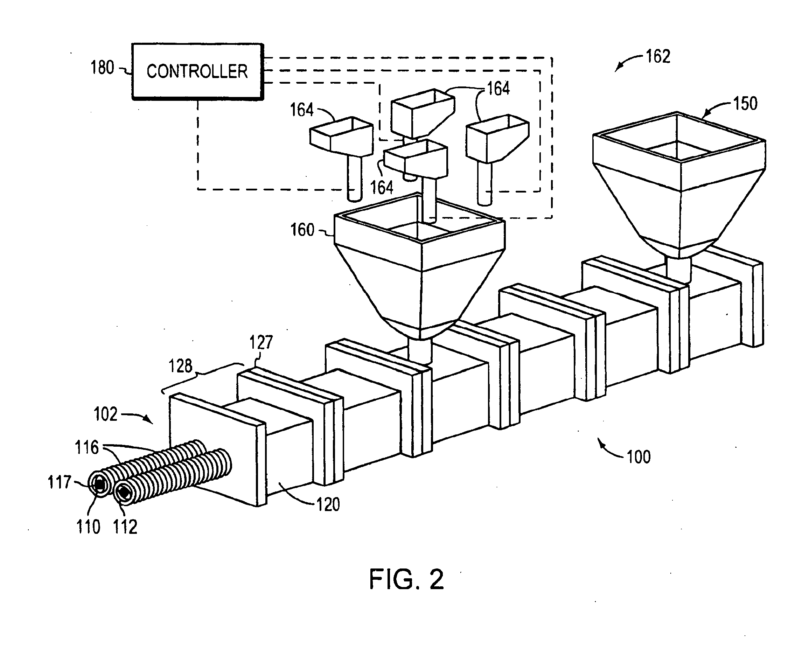

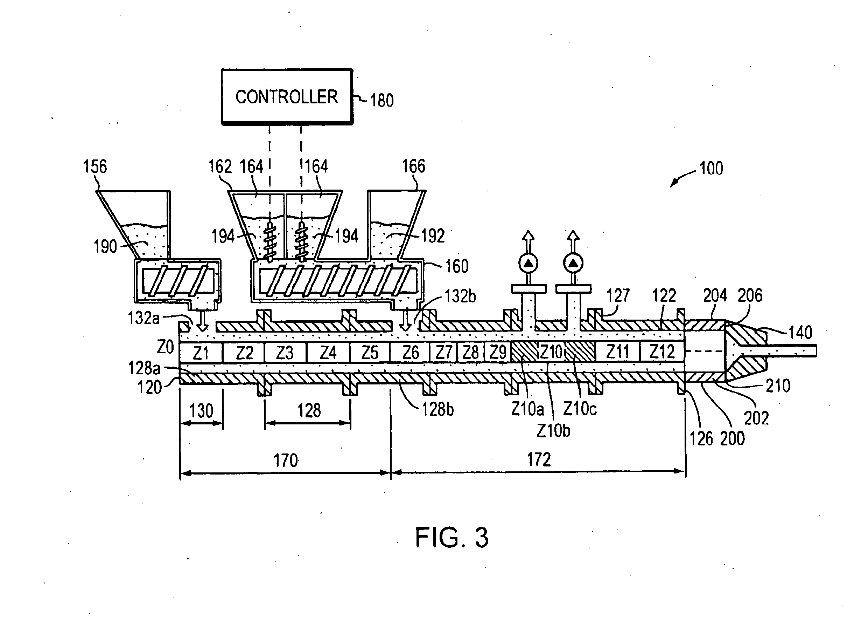

As shown in FIGS. 2 and 3, an extrusion system 100 includes at least four main stations including a supply station or primary feeder 150 that dispenses a base polymer (e.g., in the form of powders and/or pellets); a co-rotating twin screw extruder 102 arranged to receive the base polymer; a secondary side-feeder 160 that dispenses additional materials (e.g., filler materials such as wood or natural fibers, additives such as colorants, etc.) into the extruder 102 for mixing with the base polymer; and an extrusion die 140 for forming a composite extrusion with a predetermined profile.

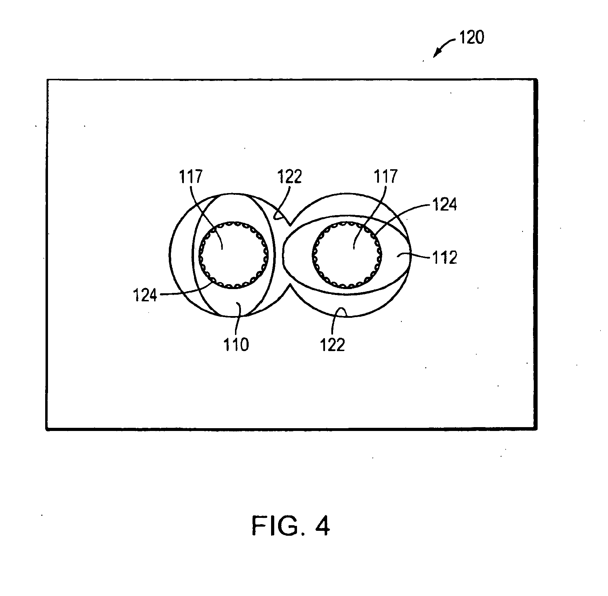

In the extrusion system 100 depicted in FIG. 2, the extruder 102 includes an extrusion barrel 120 and a pair of co-rotating extrusion screws 110, 112. The extrusion barrel 120 defines an internal cavity 122 (FIG. 4) where materials (e.g., base polymer, filler materials, additives, etc.) are mixed and conveyed. The extrusion barrel 120 is formed as an assembly including a plurality of discrete barrel segments 128. The barrel segments 128 are arranged in series, and together, form the internal cavity 122, which acts as a flow path between the supply station 150 and the extrusion die 140 (i.e., for conveyance of the various materials). The extrusion screws 110, 112 each comprise a plurality of discrete screw segments 116 scaled within the internal cavity 122 and extending from an upstream feed zone 130 to the extrusion die 140. The screw segments 116 are removable, replaceable, and interchangeable and can be arranged to achieve a desired feeding, conveying, kneading, and mixing sequence (referring to operations performed on the materials as they are conveyed through the extruder, along the internal cavity 122 of the extrusion barrel 120).

The extrusion screws 110, 112 are arranged in parallel relation and configured for co-rotational movement relative to each other. The co-rotational movement of the extrusion screws 110, 112 mixes materials, such as the base polymer, additives, etc., and conveys these materials through the extrusion barrel 120. Each of these components (i.e., extrusion barrel 120 and extrusion screws 110, 112) can be made of commercially available parts. A similar type of twin-screw extruder, wherein the screws rotate in a counter-rotational movement relative to each other, may also be used for the process. In a counter-rotational arrangement, the screws differ from the above co-rotational movement in that the mixing and dispersion are less intense and have a greater reliance of heat as opposed to shear mixing to achieve the compounding of all the ingredients.

As shown in FIGS. 2 and 3, the extrusion system 100 includes at least four main stations including: a supply station 150; a co-rotating twin screw extruder 102; a secondary side-feeder 160; and an extrusion die 140. The supply station 150 can include a single and/or double screw (i.e., twin-screw) loss-in-weight gravimetric feeder for throughput of solid materials, i.e., typically in the form of fibers, powders, and/or pellets, into a feed zone 130 in the extruder 102. A loss-in-weight feeder or feeders with a maximum feed rate of between about 50 lb/hr and about 2000 lb/hr may be utilized. The feeder(s) also deliver materials directly into the extruder when the process is initially started.

Referring still to FIGS. 2 and 3, the twin screw extruder 102 includes: (i) an extrusion barrel 120; and (ii) a pair of co-rotation extrusion screws 110, 112. The extrusion barrel 120 comprises an assembly of discrete barrel segments 128 forming a substantially continuous series connection. This arrangement offers flexibility when compared to a counter-rotational extruder in that the individual barrel segments 128 can be moved, removed, and/or exchanged to provide different barrel configurations, e.g., to allow for different feeding (e.g., entry ports), vacuum, or injection locations. In addition, the segmented barrel configuration offers the flexibility of choosing between multiple entry ports (for example, as shown at 132a) into the extruder 102. For example, the use of more than one entry port can be employed to achieve a more sophisticated extruded product in terms of compound ingredients, product properties, and appearance. Each barrel segment 128 defines a barrel bore which, when assembled, forms a substantially continuous internal cavity 122 along the length of the extrusion barrel 120 (i.e., extending from the feed zone 130 toward the extrusion die 140). Each barrel segment 128 includes electrical heating elements, such as heating cartridges (not shown), and cooling bores (not shown) for counter-flow liquid cooling, together providing for optimizeable dynamic regulation and temperature control.

Individual barrel segments 128 are selected from open barrels (i.e., with entry ports for feed zones), open barrels with inserts (for degassing, metering, or injection zones), closed barrels, and/or combined barrels for combined feeding (e.g., side feeding of fibers or additives) and venting, each being between about 4 inches and about 20 inches in length. As shown in FIG 3, the extrusion barrel 120 includes at least two open barrel segments 128a, 128b for fluid communication with the primary feeder 150 and the secondary side-feeder(s) 160, respectively. Preferably, a substantially leak-proof interface is formed at the interface between adjacent barrel segments 128. Adjacent barrel segments 128 can be connected, e.g., with bolted flanges 127, as shown in FIG. 2, or, alternatively, C-clamp barrel connectors (not shown).

Referring to FIG. 2, the co-rotating extrusion screws 110, 112 provide for a relatively efficient type of extruder in terms of its ability to disperse and distribute materials within a matrix of extruded materials. As shown, each of the extrusion screws 110, 112 comprises a segmented screw arrangement, wherein each of the extrusion screws 110, 112 include a series of discrete elements (i.e., screw segments 116) fit onto a shaft 117. Teeth 124 (see FIG. 4) allow the individual segments 116 to be secured to the shaft 117. Suitable screw segments are commercially available from ENTEK Manufacturing, Inc., of Lebanon, Oregon. The individual screw segments 116 are each removable and replaceable and may be selected to have contrasting screw profiles, thus allowing for a flexible screw profile arrangement that can be tailored to specific applications and/or process requirements.

Among the various types of screw segment profiles, the individual segments can be selected from conveying elements, mixing elements, kneading elements, and/or special elements. Mixing and kneading elements are designed in a variety of lengths, pitches and pitch directions. Kneading blocks are constructed using several sub-segments of equal or varying widths spaced at equal distances from each other. The order in which kneading, mixing, conveying, and other segments may be arranged to control shear, melt, and energy. In addition, this mixing process provides homogeneous melt and controlled dispersion-distribution of the recycled carpet waste and other additives. The segmented screws 110, 112 allow for modification of the screw profile, e.g., for modification of processing parameters, varying physical properties, and/or surface appearance of the extruded product. Generally, an overall diameter of the screw segments remains constant; however, the shape of flights (e.g., pitch and distance between flights) can vary.

The screw segments 116 can be arranged so that about a first half of the extruder 102 provides relatively high shearing and kneading (i.e., for dispersive mixing of the base materials including the recycled carpet waste) and about the second half of the extruder 102 provides relatively low shearing (i.e., for distributive mixing of the composite material and colorants). This arrangement can be used to inhibit overmixing of the one or more polymers and additives that form the polymeric portion of the composite material.

In one exemplary embodiment, each of extrusion screws 110, 112 comprises fifty-two (52) discrete screw segments 116, each between about 60 mm and about 120 mm in length. This particular configuration defines twelve (12) processing zones Z1-Z12, each zone comprising a change in screw profile defined by one or more discrete screw segments (see, e.g., FIG. 4 and Table A-1). In this embodiment, the screw segments 116 are arranged such that the first five zones (Z1-Z5) form a first mixing region 170 configured for dispersive mixing (i.e., relatively high kneading and shearing), and the last seven zones (Z6-Z12) form a second mixing region 172 configured for distributive mixing (i.e., relatively low shearing). In dispersive mixing, cohesive resistances between particles can be overcome to achieve finer levels of dispersion; dispersive mixing is also called intensive mixing. In other words, dispersive mixing includes the mixing and breaking down of discrete particles within the compound. Distributive mixing aims to improve the spatial distribution of the components without cohesive resistance playing a role; it is also called simple or extensive mixing. Distributive mixing allows for division and spreading of discrete particles into a mixture without substantially affecting the size and/or shape of the particles (i.e., no breaking down of the particles).

Table A-1 identifies typical zone temperatures and other details regarding the extruder processing system employed in the various embodiments of the invention. Temperatures for each zone, in a high/low range, are presented. Notably, the ranges presented may be utilized to produce both WPCs containing carpet waste and those containing no carpet waste. Additionally, the ranges presented may also be utilized to produce WPCs that utilize unseparated processed carpet waste in place of the base polymer (i.e., unseparated processed carpet waste comprises part of the total plastic component of the finished composite material). Examples of WPCs containing carpet wastes manufactured in accordance with the ranges exhibited in Table A-1 are described below. Temperature and other ranges outside of those depicted are also contemplated.

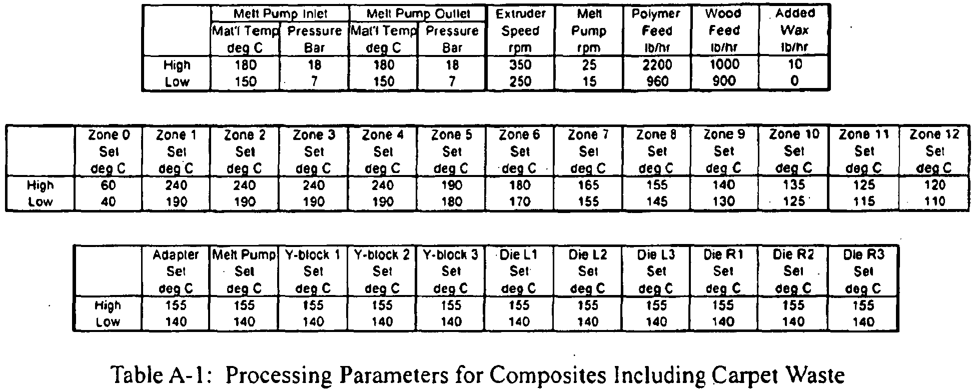

In general, conveying and feed elements (e.g., Z1, Z2, Z4, Z6, Z8, Z10, and Z12) serve to displace material through the extrusion barrel 120, from the first entry port 132a towards the extrusion die 140. Kneading blocks (see, e.g., Z3 and Z6) provide for high shear and dispersing (e.g., of base materials). Mixing elements (see, e.g., Z7, Z9, and Z11) provide for relatively high particle distribution (e.g., high distribution of fiber materials). Zones having a flight pitch less than 90° provide for compression of materials. Zones having a flight pitch of about 90° provide for frictional heating of the materials while providing little if any aid in the conveyance of the material. Zones having a flight pitch exceeding 90° provide for relatively high conveyance.

Referring to FIGS. 3 and 4, and Table A-1, zone Z0 is the ambient temperature. Zones Z1 and Z2 are configured for moving materials from the throat of the extruder 102 and heating it before it is introduced to zone Z3. More specifically, the first processing zone Z1 is configured to move cold material, e.g., a mixture of pelletized base materials, from an entry point at ambient temperature, i.e., main entry port 132a, toward the second processing zone Z2. The second processing zone Z2 is configured to increase pressure on the material as it is moved forward in the direction of the third processing zone Z3. The first eight to twenty-four segments making up the second processing zone Z2 have a flight pitch of about 90°. In this portion, conveyance is achieved primarily through the introduction of additional material from the first processing zone Z1, which results in the build up of pressure in the second processing zone Z2, which, in turn, forces the material through the second processing zone Z2.

Processing zones Z3-Z5 define a high shear section. In this section the base materials are thoroughly dispersed into a molten composite mixture. Zone Z6 marks a transition to the distributive mixing region 172. This is the zone in which the fibers (as fillers) and some additives are added to the molten composite mixture. The greater flight pitch of 120° in this zone provides for increased conveyance along or about zone Z6, i.e., this zone moves materials along quickly, thereby inhibiting cooling-off of the materials. Zones Z7-Z9 are configured to provide high distribution mixing of the fiber filler material with the molten composite mixture. The tenth processing zone Z10 includes six to twelve discrete screw segments. These segments define a first section Z10a of relatively high compression; followed by a section Z10b of relatively low conveyance, which allows the material to expand, allowing moisture to rise to the outer surface where it can evaporate; and a second section Z10c of relatively high compression.

The eleventh processing zone Z11 is a mixing zone with a relatively high flight pitch, which provides for increased conveyance and subtle mixing. The twelfth processing zone Z12 transitions from a first section of relatively high conveyance (i.e., this zone moves material at a relatively high flow/feed rate to inhibit cooling prior to entering the die) to a second section of relatively high compression, which provides for a build-up of pressure near the distal end 126 of the extruder 102, for forcing the material through the extrusion die 140.

Referring again to FIGS. 2 and 3, one or more secondary side-feeders 160 are provided for dispensing one or more additional materials (e.g., filler materials or natural fibers, recycled carpet waste, colorants, and/or other additives) into the extrusion barrel, i.e., for mixing with the base polymer. The secondary side-feeders 160 move the materials into the extruder 120 through a second side entry port 132b using, e.g., a single-screw or double-screw configuration. As shown in FIG. 3, the secondary side-feeder 160 can include one or more loss-in-weight gravimetric feeders 166 for dispensing fibers and recycled carpet waste and a multiple feeder array 162, such as volumetric auger feeders, for dispensing multiple colorants (or other additives) into the extruder. Thus, two, three, four or more additives may be added from individual hoppers 164 to the extrusion process.

The secondary side-feeder 160 can be disposed in a position downstream of the primary feeder 150 (where the base polymer is introduced) and the first mixing region 170, such that the filler materials, recycled carpet waste, and additives are dispensed into the extruder 102 for mixing with the base polymer in the second (relatively low kneading and shear) mixing region 172. Introduction of the filler material, unseparated processed carpet waste, and additives at a common zone may present particular advantages. For example, the downstream shearing and kneading effect of the extrusion screws 110, 112 on the fibers and additives is less than the upstream effect on the base materials, thereby providing a thoroughly mixed composite material (i.e., including the base polymer, recycled carpet waste, and filler materials). Alternatively or additionally, recycled carpet waste can be introduced at the primary feeder 150, between the primary feeder 150 and the secondary side-feeder 160, or the downstream of the secondary side-feeder 160. Alternatively, in embodiments of the composite where unseparated processed carpet waste replaces higher amounts of base polymer; the carpet waste may be introduced in the primary feeder 170.

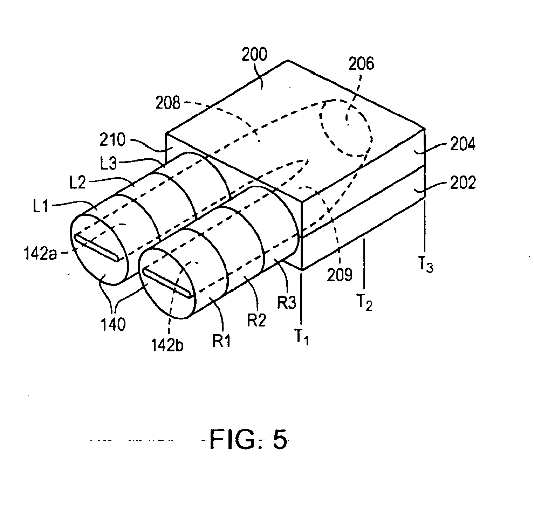

As shown in FIG. 5, the system may include a Y-block adapter 200 disposed at a distal end 126 of the extruder 102. The Y-block adapter 200 includes two adapter segments 202, 204 divided into three temperature zones, approximately defined by locations T1, T2, T3. Heating is performed by heating cartridges (not shown). The Y-block adapter 200 defines a flow channel 206, which divides flow from the internal cavity 122 of the extrusion barrel 120 into two discrete flow paths 208, 209.

The system 100 also includes an extrusion die 140 disposed at a distal end 210 of the adapter 200. The extrusion die 140 may define a pair of extrusion channels 142a, 142b, each corresponding to an associated one of the flow paths 208, 209, for forming, in tandem, a pair of extruded products (i.e., extrudates) each having a predetermined shape (i.e., corresponding to a shape of the extrusion channels 142a, 142b). Each of the extrusion channels 142a, 142b comprises three (or more) discrete segments L1-L3, corresponding to 142a, and R1-R3, corresponding to 142b. These discrete segments L1-L3, R1-R3 smoothly transition the geometry of the flow paths 208, 209 along the extrusion channels 142a, 142b to prevent introduction of air bubbles, creation of high pressure areas, etc. Each of L1-L3 and R1-R3 comprise discrete temperature zones and are heated using individual heaters.

Referring again to FIG. 3, a base mixture 190 including a base polymer (in one embodiment, a polyethylene mixture including, for example, virgin high density polyethylene (HDPE), recycled HDPE, and/or reprocessed HDPE), recycled carpet waste, and other additives (e.g., base colorant(s), internal processing lubricants, flame retardants, etc.), generally in the form of solid particles, e.g., powders and/or pellets. In one embodiment, the base mixture 190 is dispensed from the supply station 150 into the feed zone 130 of the extruder 102 at a total feed rate of between about 400 lb/hr to about 2000 lb/hr (181.4 kg/hr to about 907.2 kg/hr). Other suitable base polymers include polypropylene, medium density polyethylene, low density polyethylene, linear low density polyethylene, and PVC, when using a counter-rotational twin-screw extruder. The base mixture 190 is heated by electrical heating elements, and dispersed (i.e., the polymer particles and additive particles are mixed and broken down) as it is conveyed through the extrusion barrel 120 from the feed zone 130 towards the extrusion die 140 with the extrusion screws 110, 112 at a feed rate of between about 400 lb/hr and about 2000 lb/hr (181.4 kg/hr to about 907.2 kg/hr).

As mentioned above, the extrusion screws 110, 112 define twelve discrete processing zones Z1-Z12, wherein the first six processing zones Z1-Z6 form a first mixing region 170 (for relatively high kneading and shearing) and the last six zones Z7-Z12 form a second mixing region 172 configured for relatively low shearing and mixing. High and low temperatures used in various embodiments of the invention are exhibited in Table A-1, although higher or lower temperatures than those depicted are contemplated. As shown in Table A-1, the base mixture 190 is heated from a temperature of about 60°C (ambient, at zone Z0) to about 240°C as it is conveyed along the first four (i.e., Z1-Z4) of these processing zones, and gradually cooled before exiting the first mixing region 170, thereby forming a thoroughly mixed molten plastic material. At this point in the process, the molten material is a composite of the base polymer, i.e., high density polyethylene, recycled carpet waste, and additives.

Still other materials, such as filler materials (wood or natural fibers) and colorants are added to achieve the desired physical properties and appearance effects. The wood or natural fibers give the resultant WPC the desired stiffness, rigidity, appearance, or other properties required of a commercially successful replacement product. The colors are for appearance effects.

Referring again to FIG. 3, a plurality of natural fibers 192, such as, for example, wood fibers, hemp, kenaf, abaca, jute, flax, and ground rice hulls, and one or more additives, are metered into the extruder 102 through the one or more secondary side-feeders 160 for mixing with the molten composite materials. The natural fibers 192 and additives 194 are introduced into the extruder 102 in an area proximate the sixth processing zone Z6. The fibers 192 and additives/colorants 194 are then mixed with the molten material 190 as it is conveyed through the second (relatively low shearing) mixing region 172. As the molten composite is conveyed along about the tenth processing zone Z10, it is first compressed under vacuum of about 29 in-Hg (98.2 kPa); then the material is allowed to expand, allowing moisture to rise to an outer surface for evaporation; the material is then compressed again under vacuum of about 25 to about 29 in-Hg (84.7 to 98.2 kPa). This transition region Z10 removes moisture as the material is conveyed toward the extrusion die. The screw segments 116 are selected as described in greater detail above, to provide high distribution of the fibers 192 in the composite material 190, while at the same time inhibiting over mixing of the colorants 194 with the composite material. In this embodiment, the natural fibers 192 are metered into the extruder 102 at a rate of about 400 lb/hr to about 2000 lb/hr (181.4 kg/hr to about 907.2 kg/hr). The additives that may be introduced at this point into the extruder are usually much smaller in quantity, being in the range of 5 lb/hr to about 50 lb/hr (2.3 kg/hr to about 23 kg/hr). The exceptions being molder and/or cutter trim, which may be added at rates of about 50 lb/hr to about 300 lb/hr (23 kg/hr to about 136 kg/hr), and recycled carpet waste which may be added at rates of about 50 lb/hr to about 500 lb/hr (23 kg/hr to about 136 kg/hr). In addition to adding additives at the secondary side feed 160, unseparated processed carpet waste may also be added at this location, if desired.

All the feeders, both for the main entry port and for secondary port(s) are controlled through a programmable logic controller 180. The amounts of each material added is controlled for optimum formulation control allowing for the use of specific materials at specific amounts. These feeder controls thus control the physical properties of the extruded composite product.

The composite material is gradually cooled from the temperature when exiting the first mixing region 170 to a temperature of about 170°C to about 180°C as it is conveyed along the second mixing region 172 towards the extrusion die 140. This cooling allows the fibers 192 to mix with the molten composite material 190 without being destroyed by the process temperatures. The material is compressed as it is conveyed from zone Z11 to zone Z12, thus allowing pressure to build-up, e.g., between about 50 bar to about 90 bar at the extruder exit, in order to force the material through the die. In one embodiment, an adapter and melt pump are located at the distal end 126 of the extrusion system 100. The melt pump levels pressure within the system 100 and increases speed of the extruded material. Table A-1 also depicts the temperature and pressure ranges of the material at the melt pump. The composite material is then fed into the Y-block adaptor (if present) where it is heated to a temperature of about 155°C and split into two separate flows, which are forced through corresponding extrusion ports 142a, 142b of the extrusion die 140 to form a pair extruded composite parts.

The above references to unseparated processed carpet waste, recycled carpet waste, or variants thereof, refer to materials arrived at after processing either or both of industrial carpet waste and post-consumer carpet waste. Industrial carpet waste results from the carpet manufacturing process and is in large part the "edge-trim" material. This is referred to as selvedge. Post-consumer carpet waste is material resulting from replacement of used or damaged carpet. This post-consumer material is normally an amalgamation of carpet with different face fibers. As an example, the post-consumer carpet waste may be wool, nylon, polyester, polypropylene, or blends of all the previous fibers. The recycling process may include the classification of the waste carpet by type of face fiber if desired. In general, any type of carpet, new or used, soiled or clean, may be recycled and utilized in this invention.

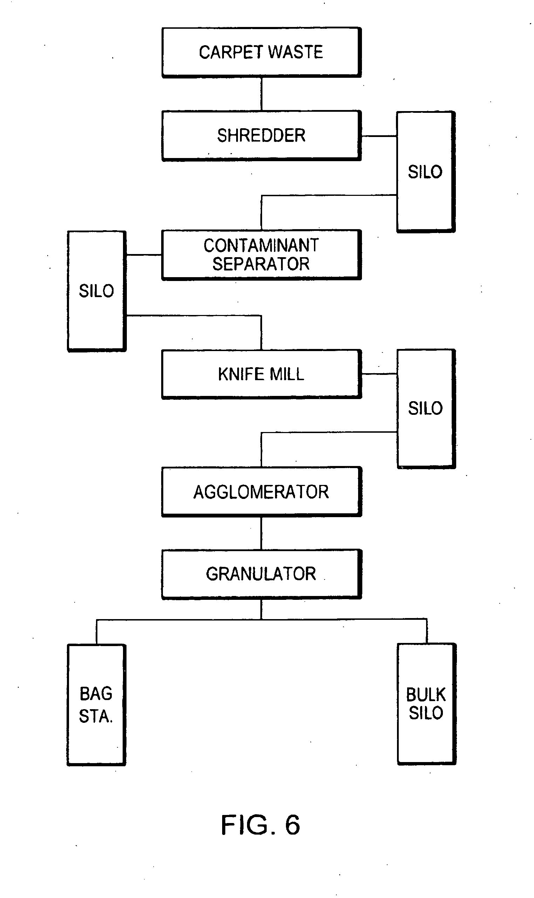

FIG. 6 depicts a schematic view of a system for recycling carpet to produce pelletized carpet waste for use in the present invention. In one embodiment, post-industrial (selvedge) carpet or post-consumer carpet is first fed through a shredder, chopper, or other unit that mechanically cuts the carpet into pieces approximately 7.62 cm square (7.62 cm x 7.62 cm) (three inches square (3" x 3")), although other sizes are contemplated, such as about 5.08 cm sqare (5.08 cm x 5.08 cm) (2" x 2") to about 10.16 cm square (10.16 cm x 10.16 cm) (4" x 4"), depending on the equipment used. The shredder may be manufactured by Pallmann Maschinenfabrik, Vecoplan, LLC, Weima America, Inc., or other suitable manufacturers. These smaller pieces are then fed to a vertical cyclone separator where dirt and other contaminants are removed from the carpet material. A knife mill then cuts or shreds the remaining pile fibers into untwisted loops about one-half inch to about 2.54 cm (1 inch) in length. These fibers then pass through another vertical cyclone to remove dirt and other remaining contaminants. In this step, some of the carpet backing containing inorganic fillers may also be removed. Generally, however, it is unnecessary to separate the various carpet components prior to incorporating the recycled carpet waste into WPCs. All of the components of carpet may be used, not only one component, such as the carpet fibers. Thus, manufacturing time, cost, and the total amount of carpet waste required are decreased, since the step of component separation is not performed. The slightly-size reduced material, due to the knife mill processing, is ready for the next step, the agglomeration process, while the dirt and carpet backing materials that may have been removed from the small chunks are disposed. Carpet backing that is not removed, however, does not have any adverse effect when incorporated into a WPC using recycled carpet waste according to the teachings herein. The shredded carpet waste material, or "fiber fluff," also may be blended with other materials such as wood or natural fibers, synthetic fibers (i.e., fiberglass), inorganic fillers, or other reinforcing fillers. The fiber fluff material or the blended material is then conveyed to the agglomeration step.

The agglomeration of the above materials occurs inside the agglomerator. The materials enter a horizontal drum containing a revolving rotor that is shaped so as to force the fiber fluff or blends against the drum wall. The drum wall is perforated so that, as the rotor forces the contained materials against the perforated wall, the material is forced through the perforations, thereby forming strands of generally uniform diameters. On the outside of the drum are stationary knives which cut the strands into generally uniform lengths. During this process, the material is heated by friction to a temperature that remains below the melting point of the highest melting point material in the blend. The temperature is controlled by the speed of the rotor, the diameter of the perforations, and the thickness of the drum wall. As each component of the carpet waste, i.e., backing and carpet fibers, is pressed against the wall of the drum, that material heats up due to friction, until the material sufficiently softens, such that it is then pressed through the perforated drum by the rotor. The agglomerating machinery could be replaced by a pellet mill manufactured by Bliss Industries or California Pellet Mill Co.

The pellets or granules that are formed in the agglomeration step are generally cylindrical in shape and approximately 3.175 mm (0.125") in diameter and about 3.175 mm (0.125") to about 6.35 mm (0.25" long). The diameter and length of the granules can be modified by changing the diameter of the holes in the drum wall and/or changing the speed of the rotation against the knives. Because the granules are hot when they are formed and cut to length, some of the granules may be stuck to one another. Therefore, for better size consistency, the granules next pass through a granulator which separates any stuck granules. This granulator step may also be used to reduce the size of the granules, and/or the granules may be further reduced in size by a pulverizer (not shown). For example, if the final desired dimension is less than 3.175 mm (0.125"), the pulverizer may be used to reduce the particle size to 3.15-6.30 cm⁻¹ (8-16 mesh). This is the equivalent of about 1.02 mm (0.04") to about 2.54 mm (0.10"). Other sizes, up to and greater than about 7.87 cm⁻¹ (20 mesh) are also contemplated. These pellets or granules may be bagged, stored in a silo, or fed directly to the extrusion system, as desired. Alternatively or additionally, the carpet waste may be processed into a powder or other desired form. Particles that are sized to pass through a 3 mm - 4 mm mesh screen may be utilized. In addition to the process identified in FIG. 6, additional carpet recycling processes and systems are described in U.S. Patent Application Serial No. 11/846,865, filed August 29, 2007; and U.S. Patent Application Serial No. 11/514,303, filed August 31, 2006, both entitled "Carpet Waste Composite".

Used herein, the material exiting the agglomerator is referred to interchangeably as "unseparated processed carpet waste," "processed carpet waste," "carpet waste," "recycled carpet waste," or variants thereof. "Unseparated" refers to the fact that the various components of the waste carpet need not be separated from each other prior to processing into composite materials. In fact, the individual granules of material exiting the agglomerator are a combination of fiber (generally nylon, polyester, polypropylene, etc), with an outer layer or coating of other carpet materials (backing, adhesive, etc.) having lower melting points. Since this outer layer of other carpet materials is substantially melted during the agglomeration process, the individual coated fibers that exit the agglomerator tend to stick together. A granulator is used to separate these individual fibers pellets. Unseparated processed carpet waste tends to have a high level of mineral filler (i.e., calcium carbonate from the backing material). This mineral filler may comprise up to about 25 % of the total weight of the unseparated processed carpet waste. In certain plastic composites utilizing unseparated processed carpet waste, this mineral filler may in a relatively heavy finished article. However, in the composite building material described herein, the mineral filler comprises a relatively small percentage of the total amount of the finished product.

Introduction of the recycled carpet waste into the wood-plastic composite is facilitated, at least in part, by the retention of the processability in the extruder, the capability to withstand the downstream (of the extruder) mechanical functions and the resulting physical properties. The goal of substantially replicating the properties of existing WPCs is initially controlled by the formulation including the base polymer, the fiber, the additives, and the unseparated processed carpet waste.

Table B-1 depicts the ranges of various components that may be utilized in composite formulations in accordance with the present invention. Specifically, materials introduced via the main feed may include HDPE pellets (as a base polymer), lubricants, colorants, and recycled carpet waste (CW-1P, post-industrial waste, and CW-2P, post-consumer waste). Other components, such as regrind (in pulverized or flake form) and repro, to replace at least a portion of the HDPE pellets used in the base polymer, also may be introduced via the main feed. The regrind material is post-industrial or post-consumer polyethylene materials or combination of the two. The repro is reprocessed extrusion materials generated in the production of the extruded product. The side feed, located downstream from the main feed, may be utilized to introduce wood filler (maple, oak, or combinations thereof), colorants, recycled carpet waste, and lubricants. Also included is a baseline composite formulation, including defined amounts of HDPE pellets, colorant, filler, and lubricant, that does not include any recycled carpet waste.

**Table B-1: Formulations for Extruded Composites**

| | Range | |
|---|---|---|
| | Low | High |
| Material | % | % |
| Main Feed | | |
| HDPE Pellet | 0 | 45 |
| Regrind (Pulverized) | 0 | 12 |
| Regrind (Flake) | 0 | 12 |
| Repro | 0 | 6 |
| Lubricant* | 4 | 7 |
| Color | 1 | 2 |
| CW-1 | 1 | 60 |
| CW-2 | 1 | 60 |
| CW-1/CW-2** | 50 | 80 |
| | | |

| Side Feed | | |
|---|---|---|
| Wood Filler | 18 | 55 |
| Color | 1 | 2 |
| CW-1 | 1 | 60 |
| CW-2 | 1 | 60 |
| Lubricant* | 4 | 7 |
| | | |
| *Lubricants: separate addition of zinc stearate and EBS wax or addition of specialty lubricant Struktol 104. | | |
| **Elevated percentages of carpet waste are utilized when virgin base polymer approaches 0% of the total composite formulation | | |

It has been discovered that, surprisingly, the recycled carpet waste formulations produce an extruded product having performance and appearance characteristics essentially the same as the standard wood-plastic composite, and can be processed in the extruder using the same screw profiles and zone parameters. Further, the ratio of wood fiber to total HDPE remains substantially constant and the recycled carpet waste is added to the fixed wood fiber/HDPE compound. Two specific examples of WPCs manufactured in accordance with the component ranges of Table B-1 and the process ranges of Table A-1 are depicted in Tables D-1 and D-2. Ratios of the base polymer to filler material for WPCs that utilize recycled carpet waste may range from 40:60 to 60:40, and still exhibit suitable acceptable performance. Certain embodiments have a base polymer to filler material ratio of about 45:55. All of the additives remain in substantially constant compound ratios with the exception of the lubricant, which is adjusted to account for the larger total compound weight when the unseparated processed carpet waste is added.

Table B-1 illustrates the range of individual components that may be used to produce acceptable WPCs. It is shown that the recycled carpet waste can be added from about 1% to about 60% of the total formula weight when a virgin base polymer is being utilized and still retain acceptable physical properties in the extruded component. Certain embodiments may include carpet wastes in the amount of about 10% to about 40% total weight. Still other embodiments may include carpet wastes in the amount of about 15% to about 25% total weight. Further, as discussed above, the recycled carpet waste can be added to the composite formulation at various ports on the extruder. Specifically, Table B-1 exhibits the addition of the recycled carpet waste into the composite with the base polymer, or the recycled carpet waste may be added through a side-feed entry into the extruder. There is no discernible difference in the extruded product when adding the recycled carpet waste resulting from the use of selvedge (CW-1), or mixed post-consumer carpet waste (CW-2). Further different types of lubricant perform equally well in the processing. For example, where both a "one-pack" or combined specialty lubricant (e.g., Struktol 104) is used as well as a more conventional individual lubricant package (e.g., Zinc Stearate, EBS wax, etc.), the invention processed acceptably regardless of the lubricant approach to formulating. Within the ranges of components depicted in Table B-1, certain formulations have proven particularly desirable for commercial purposes. One such embodiment of the composite material is comprised of the following: about 31.3% HDPE, about 20.0% unseparated processed carpet waste, about 40.9% natural fiber, about 6.4% lubricant, and about 1.4% color.

Embodiments of the composite material wherein unseparated processed carpet waste comprises part of the base polymer are also contemplated. In such embodiments, the amount of virgin base polymer material will be substantially reduced. As described herein, unseparated processed carpet waste may be effectively mixed with virgin base polymer to produce composite materials. It has been discovered, however, that small amounts of HDPE may not mix well with unseparated processed carpet waste, if that carpet waste contains a high percentage of non-polyolefin polymers such as polyamides. This could lead to performance issues in products made with these components, including the potential for delamination of the finished product. When processing unseparated processed carpet waste into a composite material, temperatures higher than the melt temperature of HDPE should be utilized to process the carpet waste. However, the small amounts of HDPE introduced into the carpet waste simply can not typically be mixed properly with carpet waste having high percentages of non-polyolefin material. It is believed that this may be a function of the dissimilarity between the non-polyolefin material (of the carpet face fibers) and the virgin HDPE, wherein the non-polyolefin material exhibits non-compatibility with the HDPE sufficiently to allow for a consistent mixture. Although further study is required, composite formulations utilizing unseparated processed carpet waste having high percentages of polypropylene face fibers and smaller amounts of virgin polypropylene may not experience this condition. Accordingly, coupling agents or other compatibilizers, such as maleaic anhydride polypropylene (MAPP), may be utilized to improve the processability of the mixture and performance of the finished product.

As depicted in Table B-1, embodiments of the WPC utilizing unseparated processed carpet waste as the base polymer may comprise between about 50% to about 80% by weight carpet waste, preferably between about 55% to about 70% carpet waste, and more preferably, about 60% to about 65% carpet waste. The remainder of the composition may be comprised of additives (about 10%) and natural fibers (about 10% to about 40%). One formulation that displays desirable processing characteristics includes about 60.9% unseparated processed carpet waste, about 30% natural fibers, about 4.6% lubricant, about 3.0% color, and about 1.6% zinc borate (a mold inhibitor). Another embodiment includes about 59.0% unseparated processed carpet waste, about 30% natural fibers, about 4.6% lubricant, about 3.8% color, about 1.6% zinc borate, and about 1.0% coupling agent.

Examples of the processing conditions of the extruder are shown in Table A-1. The variability of the processing temperatures and pressures is quite wide. As an example, the maximum temperature of the barrel may vary from about 190°C to about 240°C. At the same time the pressure exiting the extruder may vary from about 8 bar to about 30 bar. Similarly, the internal pressure in the die(s) depends on whether the extrusion is being done on a single die or double die arrangement. On a single die the extruded product in the invention processes at about 1 bar to about 15 bar. The same formulation will process through a double die arrangement at about 30 bar to about 90 bar. It has been discovered that, surprisingly, the temperatures of the barrel segments and the pressures at both the extruder exit and in the die for the recycled carpet waste composite are similar to standard wood-plastic composite processing parameters.

It has also been discovered that wood-plastic composites containing recycled carpet waste process equally well on different sizes of extruders. Specifically, the material performs similarly on a 53 mm extruder as it does on a 103 mm extruder. A wide range of processing temperatures allow for the production of an acceptable extruded product.

The downstream mechanical operations, beyond the extruder die arrangement, follow the same pattern as the formulation and processing conditions, in that, the composite containing the recycled carpet waste has minimal effect on processing of the final product relative to the conventional wood-plastic composite. The extruded product containing the recycled carpet waste can be cut using conventional traveling saw or other equipment. Likewise, the extruded board can be molded and/or embossed using standard equipment. In the case of molding, a blade cutter is used to change the surface appearance to a grooved or sanded appearance. The performance of this equipment for this downstream process step is unchanged when the formulation with the recycled carpet waste is introduced. These formulations incorporating the recycled carpet waste also are capable of being hot surface embossed. An embossing roll using either an internal hot oil system to heat the surface of the embossing roll or an infra-red heating system to heat the roll surface both emboss the board containing the recycled carpet waste. There is no difference when running formulation with or without the recycled carpet waste.

Composite formulations containing recycled carpet waste give equivalent flexural strength and stiffness to the standard composites. Upon extrusion and cooling, the finished composite materials may be tested and inspected to ensure acceptable performance and geometry. Multiple parameters may be evaluated, including visual appearance, dimensional control, physical properties, water absorption, etc.

Visually, the composites are inspected for cracks along the edges or gaps within the material internally (the composites may be cut, bored, etc., to confirm consistency of distribution of the recycled carpet waste and other materials). Dimensional control inspections determine whether the composites adequately resist warping, bending, or twisting. Samples may be tested, for example under ASTM-D790, to determine specific physical properties, such as stress, displacement, modulus of elasticity, and load. As indicated below, Examples manufactured with recycled carpet wastes as described herein display similar properties to WPCs lacking recycled carpet wastes.

Examples made with recycled carpet waste as described herein also display particular resistance to water absorption when subjected to the FCQA Water Absorption Test. In certain embodiments, absorption amounts of not more than about 10% by weight are obtained; amounts of not more than about 7% by weight may also be obtained. As shown in Tables C-I, D-I, and D-2, the various Examples exhibit improvement in the moisture absorption of the finished extruded product as recycled carpet waste is added to the composite formulation.

### COMPARATIVE EXAMPLE 1

Comparative Example 1, depicted in Table C-I, is a WPC manufactured in accordance with the processes described herein, but without the use of recycled carpet waste. As can be seen, Comparative Example 1 fails at 2745 N (617 lbf), with a displacement at failure of 6.19 cm (2.437 inches). The water absorption is approximately 10.3% weight of Comparative Example 1.

**Table C-1: Comparative Example 1**

| | FC | FC |
|---|---|---|
| | 6524A | |
| Material | lb. | % |
| Main Feed | | |
| HDPE Pellet | 246.0 | 42.0 |
| Regrind (Pulverized) | 0.0 | 0.0 |
| Regrind (Flake) | 0.0 | 0.0 |
| Repro | 0.0 | 0.0 |
| Struktol 104 | 0.0 | 0.0 |
| Color | 12.0 | 2.0 |
| CW-1P | 0.0 | 0.0 |
| CW2P | 0.0 | 0.0 |

| Side Feed | | |
|---|---|---|
| Wood Filler | 300.7 | 51.3 |
| Color | 0.0 | 0.0 |
| CW-1P | | 0.0 |
| CW-2P | | 0.0 |
| Struktol 104 | 27.0 | 4.6 |
| | | |
| Formulation Weight | 585.7 | 100.0 |
| | | |
| Rate, lb./hr. | 800 | |
| Stress, psi | 3001 | |
| Displ., in. | 2.437 | |
| MOE, psi | 601704 | |
| Load, lbf | 617 | |
| | | |
| Water Absorption, %wt | 10.3 | |

### EXAMPLE 1

Example 1 depicts an exemplary WPC manufactured with 15.7% post-consumer carpet waste. As can be seen, although the total weight of HDPE pellet and wood filler remains consistent with that utilized in Comparative Example 1, the use of recycled carpet waste effectively decreases the percentage of those components within Example 1. The use of recycled carpet waste results in Example 1 failing at 633 lbf (2816 N), with a displacement at failure of 2.244 inches (57.0 mm). The physical mechanism responsible for this decrease in displacement at failure, as compared to the Comparative Example 1, is the subject of further study. Notably, however, amount of recycled carpet waste effectively decreases the percentage of wood filler within Example 1.

**Table D-1: Example 1**

| | FC | FC |
|---|---|---|
| | 6524C | |
| Material | kg. | % |
| Main Feed | | |
| HDPE Pellet | 111.6 | 35.1 |
| Regrind (Pulverized) | 0.0 | 0.0 |
| Regrind (Flake | 0.0 | 0.0 |
| Repro | 0.0 | 0.0 |
| Struktol 104 | 0.0 | 0.0 |
| Color | 5.4 | 1.7 |
| CW-1P | 0.0 | 0.0 |
| CW-2P | 49,9 | 15.7 |
| | | 0.0 |

| Side Feed | | |
|---|---|---|
| Wood Filler | 137.4 | 51.3 |
| Color | 0.0 | 0.0 |
| CW-1P | | 0.0 |
| CW-2P | | 0.0 |
| Struktol 104 | 15.0 | 4.6 |
| | | |
| Formulation Weight | 318.3 | 100.0 |
| | | |
| Rate, kg./hr. | 362.9 | |
| | | |
| | | |
| Stress, MPa | 21,1 | |
| Displ., cm. | 5.7 | |
| MOE, GPa | 3.84 | |
| Load N | 2817 | |
| | | |
| Water Absorption, %wt | 6.5 | |
| | | |

### EXAMPLE 2

Example 2 depicts an exemplary WPC manufactured with 26.9% post-consumer carpet waste. Similar to Example 1, the total weight of HDPE pellet and wood filler remains consistent with that utilized in Comparative Example 1, while the increased use of recycled carpet waste again decreases the percentage of those components within Example 2. The use of recycled carpet waste results in Example 2 failing at 2692N (605 lbf), with a displacement at failure of 4.22 cm (1.662 inches). Again, the decrease in displacement at failure, as compared to both Comparative Example 1 and Example 1, is the subject of further study, but the decrease appears to be directly linked to the amount of recycled carpet waste present in Example 2. Presumably, a sample containing an even higher percentage of recycled carpet waste would have an even lower displacement at failure. Notably, again, the water absorption of Example 2 is lower than that of both Comparative Example 1 and Example 1. This is consistent with the observation that the increased amount of recycled carpet waste effectively decreases the percentage of wood filler within Example 2.

**Table D-2: Example 2**

| | FC | FC |
|---|---|---|
| | 6524E | |
| Material | kg. | % |
| Main Feed | | |
| HDPE Pellet | 111.6 | 30.1 |
| Regrind (Pulverized) | 0.0 | 0.0 |
| Regrind (Flake | 0.0 | 0.0 |
| Repro | 0.0 | 0.0 |
| Struktol 104 | 0.0 | 0.0 |
| Color | 5.4 | 1.5 |
| CW-1P | 0.0 | 0.0 |
| CW-2P | 99.80 | 26.9 |
| | | |

| Side Feed | | |
|---|---|---|
| Wood Filler | 136.4 | 36.8 |
| Color | 0.0 | 0.0 |
| CW-1P | | 0.0 |
| CW-2P | | 0.0 |
| Struktol 104 | 17.2 | 4.7 |
| | | |
| Formulation Weight | 370.4 | 100.0 |
| | | |
| Rate, kg./hr. | 317.5 | |
| | | |
| Stress, MPa | 20.2 | |
| Displ., cm. | 4.22 | |
| MOE, GPa | 3.92 | |
| Load, N | 2692 | |
| | | |
| Water Absorption, %wt | 5.6 | |
| | | |

### FOAMING PROCESSES AND FOAMED COMPOSITES

Another embodiment of the invention includes the addition of chemical foaming agents (CFAs) to the extrusion process, wherein the extruded composite containing the carpet waste is foamed, thus allowing for reduced weight of the final product. The composite in this aspect of the invention contains polyethylene (HDPE, MDPE, LDPE, and LLDPE), polypropylene, PVC, and combinations thereof of the base polymer. The processed carpet waste added during the extrusion process may consist of wool, nylon, polyester, polypropylene, jute, sisal, and combinations thereof. Moreover, the additives identified above with regard to the non-foamed extrusions may also be utilized. The blends of carpet waste, polymer, fillers, and additives include composites with about 1 % to about 60 %, by weight, of processed carpet waste, about 10 % to about 40 %, by weight, of processed carpet waste, and about 15 % to about 25 %, by weight, of processed carpet waste. Additionally, the foamed composites have ratios of base polymer to filler material similar to those presented above with regard to the non-foamed composites.

In general, extruded fiber-plastic composite products have a specific gravity ranging from about 0.9 to about 1.5. By comparison, water has a specific gravity of 1.0. The specific gravity reflects the density of polymers and the fibers used in the extruded composite. Adding CFAs to the extrudable mixture decreases the density of the finished composite, which may provide certain performance and economic advantages.

A CFA may be added to the extrusion process to create a foam structure to the extruded composite, thereby reducing the specific gravity of the extruded materials. This, in turn, offers a reduced weight and lower material content extruded finished part. The choice of CFAs is dependent on the type of base polymer that is used in the composite formulation. Regardless of the base polymer, either endothermic or exothermic CFAs or blends of the two types, can be used to create a foam structure during the extrusion process. Extruded products made with CFAs may be produced with the extruder depicted above in FIG. 2. Tables A-2 and A-3 identify typical zone temperatures and other details regarding the extruder processing system employed in various embodiments of the invention. Temperatures for each zone, in a high/low range, are presented. Examples of WPCs containing carpet wastes and CFAs manufactured in accordance with the ranges exhibited in these tables are described below. Temperature and other ranges outside of those depicted are also contemplated.

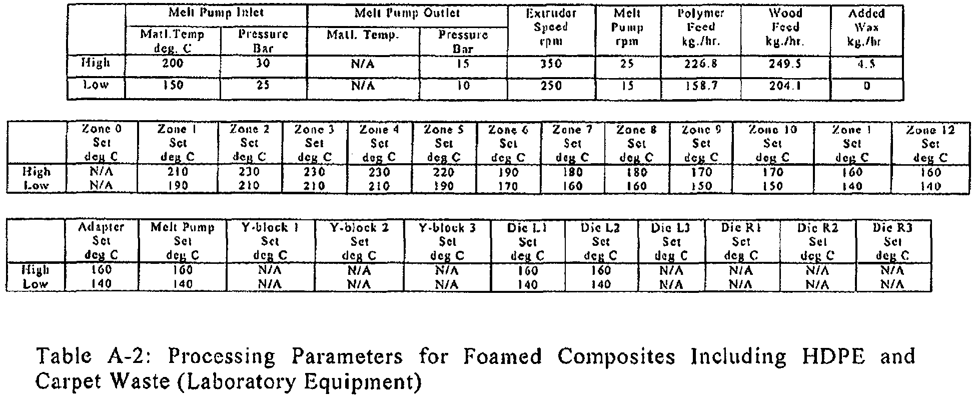

Specifically, Table A-2 identifies process parameters for foamed extrusions including high-density polyethylene, natural fibers, and carpet waste, where the extrusions were made using laboratory equipment. Process parameters that are identified as "N/A" were not determinable, as the available laboratory equipment was not fitted with a Y-block adapter, and utilized only a single two-zone die (as opposed to the Y-block adapter and pairs of three-zone dies depicted in FIG. 5 and Table A-1). Table A-3 identifies process parameters for foamed extrusions, again, including high-density polyethylene, natural fibers, and carpet waste, as expected for manufacturing on production scale equipment similar to that depicted in FIG. 2.

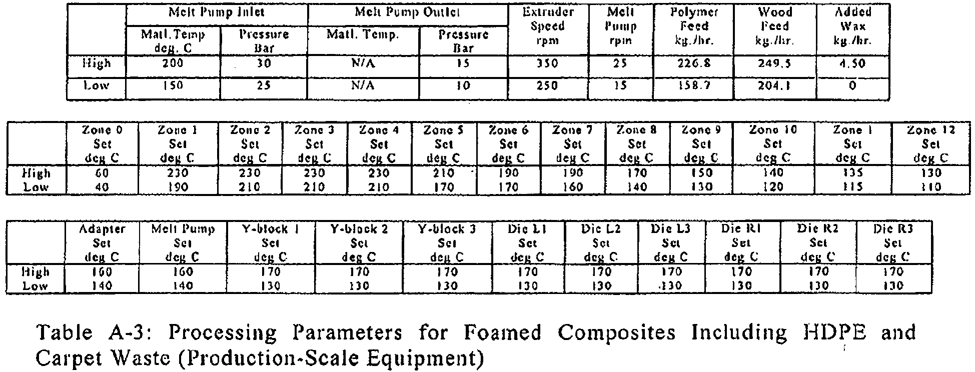

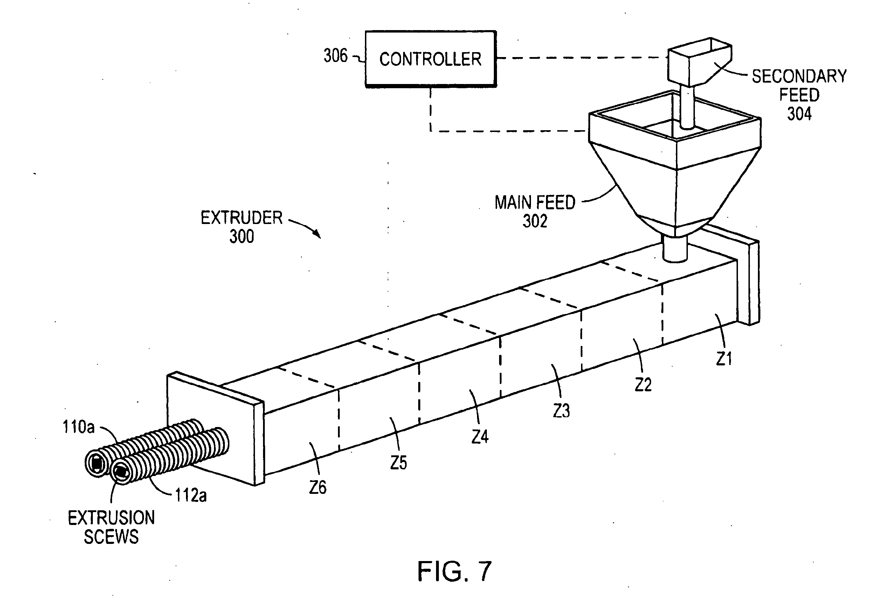

Referring to FIG. 7 and Table A-4, a schematic perspective view of a PVC extruder 300 utilized in certain embodiments of the present invention is depicted. The PVC extruder includes a main feed 302, through which various components of the extrudable mixture may be introduced (e.g., the PVC compound, regrind, exothermic CFAs, and carpet waste). Additionally, endothermic CFAs and additional wood filler or other natural fibers may be introduced through a secondary feed 304, into the main feed 302. A controller 306 controls the introduction of all materials into the extruder 300, which consists of six zones Z1-Z6. Table A- 4 identifies process parameters for foamed extrusions including PVC carpet waste run on laboratory or process equipment (the same extrusion equipment may be used in both processes). Moreover, the equipment for PVC extrusions includes the Y-adapter and pair of three-zone dies, as depicted in FIG. 5. Information regarding the "Coextruder" portion of the table is described below.

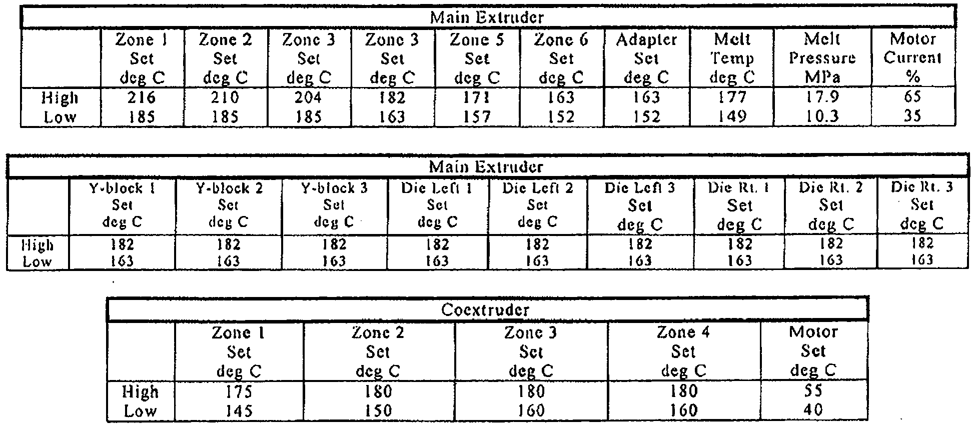

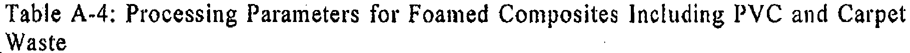

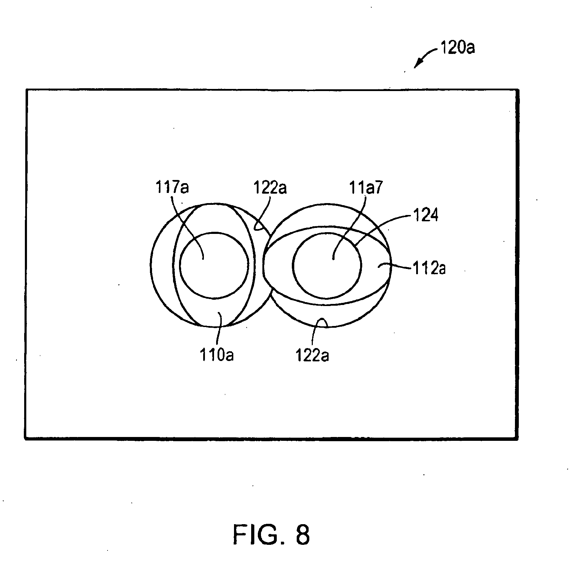

Extrusion screws 11 Oa, 1 12a for the PVC extruder are depicted in FIG. 8 and may differ from those depicted in FIGS. 2-4. FIG. 8 is an end view of the extrusion barrel 120a, including the screws 1 10a, 1 12a. The screws 1 10a, 1 12a for the PVC extruder 300 are single screws that extend the length of the extruder 300, within a barrel 122a. They each consist of a single central shaft 1 17a, and are generally not comprised of multiple, individual segments; therefore, they lack the teeth present on the screws depicted in FIG. 4. The number of flights/in, may vary for each zone, as required for a particular application, to properly knead and push the extrusion material through the extruder.

Independent of the type of base polymer used in the composite formulation, the CFAs are added to the extrusion process at a level of about 0.1% to about 5.0% by weight of the total formulation. The foamed composite product may be produced on either a single-screw or twin-screw extruder. The CFA can be introduced to the extrusion process with any of the other compound ingredients, or it may be added directly into the extruder at a point further down the extruder and closer to the die. The CFA emits gases as its temperature rises inside the extruder and die. The gases are trapped inside the composite melt causing the formation of a cell structure within the composite. The type and amount of CFA determines the size of the individual cells, thus giving a fine or coarse cell structure. Additionally, the choice of CFA will determine whether the structure is open cell or closed cell. Closed cell composite building products may be used effectively outdoors, as the closed cell structure prevents the migration of water and contaminants through the interior of the extruded composite.

Table B-2 and B-3 illustrate the range of individual components that may be used to produce acceptable foamed WPCs. Specifically, Table B-2 depict ranges for extruded materials consisting generally of high density polyethylene, CFAs, and carpet waste. It is shown that the recycled carpet waste can be added from about 1% to about 60% of the total formula weight and still retain acceptable physical properties in the extruded foamed component. Certain embodiments may include carpet wastes in the amount of about 10% to about 40% total weight. Still other embodiments may include carpet wastes in the amount of about 15% to about 25% total weight. Further, as discussed above, the recycled carpet waste can be added to the composite formulation at various ports on the extruder. As with non-foamed extrusion, there is no discernible difference in the extruded product when adding the recycled carpet waste resulting from the use of selvedge (CW-1), or mixed post-consumer carpet waste (CW-2) and unseparated processed carpet waste may be used in place of up to about 100% of the virgin base polymer. Further, different types of lubricant perform equally well in the processing. For example, where both a "one-pack" or combined specialty lubricant (e.g., Struktol 104) is used as well as a more conventional individual lubricant package (e.g., zinc stearate, EBS wax, etc.), the invention processed acceptably regardless of the lubricant approach to formulating. One exemplary CFA used in conjunction with HDPE is the ALTERFORM® 1060 product, manufactured by Phillips Chemical Co., although other acceptable CFAs are contemplated. The ALTERFORM product acts as both an exothermic and an endothermic CFA, and produces satisfactory results with WPCs utilizing HDPE and carpet waste. Within the ranges of components depicted in Table B-2, certain formulations have proven particularly desirable for commercial purposes. One such embodiment of the composite material is comprised of the following: about 24.4 % HDPE, about 8.1 % pulverized regrind, about 19.8 % unseparated processed carpet waste, about 39.8 % natural fibers, about 1.2 % foaming agent, about 4.6 % lubricant, and about 2.0 % color.

**Table B-2: Formulations for Extruded Composites Utilizing HDPE and CFA**

| | Range | |
|---|---|---|
| | Low | High |
| Material | % | % |
| Main Feed | | |
| HDPE pellet/powder | 20 | 45 |
| Regrind (pulverized) | 0 | 12 |
| Regrind (flake) | 0 | 12 |
| Repro | 0 | 6 |
| Lubricant* | 4 | 7 |
| Color | 1 | 2 |
| CW-1 | 1 | 60 |
| CW-2 | 1 | 60 |
| CW-1/CW-2** | 50 | 80 |
| Chemical Foaming Agent | 0.1 | 5 |
| | | |

| Side Feed | | |
|---|---|---|
| Wood filler | 18 | 55 |
| Color | 1 | 2 |
| CW-1 | 1 | 60 |
| CW-2 | 1 | 60 |
| Lubricant* | 4 | 7 |
| Chemical Foaming Agent | 0.1 | 5 |
| | | |
| *Lubricants: separate addition of zinc stearate and EBS wax or addition of specialty lubricant Struktol 104. | | |
| **Elevated percentages of carpet waste are utilized when virgin base polymer approaches 0% of the total composite formulation | | |

At least two types of foaming processes may be utilized for WPCs utilizing carpet waste, with satisfactory results. These processes are referred to freefoam and Celuka processes. In general, mixtures utilizing polyethylene may be manufactured using the freefoam process, in which the die size is smaller than the desired final size of the extruded product. In the freefoam process, the foaming expands the outer dimensions of the product. As an example, a sample with an extruded thickness of 1 in. would pass though a die of approximately 0.7 in. (18 mm), before expanding to its final size. Die sizing considerations for freefoam processes are known to those of ordinary skill in the art.

Mixtures utilizing PVC mixtures may be manufactured utilizing the Celuka process. In the Celuka process, the mixture is extruded around a mandrel or other component that forms a void or hollow within the middle of the extruded product. Once the extruded product passes beyond the mandrel, and as the product cools, it expands into the void, while maintaining a substantially consistent outer profile. The extruded product may expand to completely fill the void or may leave a hollow core, which reduces total weight of the finished product. In one example, if it is desired to reduce the weight of a finished product of uniform thickness by approximately 50%, the mandrel would be approximately 45% of the area of the profile, depending on the amount, type, etc., of foaming agent. Die and mandrel sizing considerations for the Celuka process are known to those of ordinary skill in the art.

In addition to the two processes noted above, calibration may be utilized downstream of the extruder to control the foamed expansion process. In certain embodiments, the extruded mixture is passed through one or more secondary dies or calibrators to control the foaming expansion process so the extruded material can obtain a final, exact dimension. The calibrator(s) utilize both vacuum pressure, to control a pressure differential of the environment to prevent shrinkage of the extruded mixture, and water, to cool and lubricate the mixture, thus controlling the temperature. The number of calibrators used may be varied depending on application and tolerances required in the finished product. Certain embodiments may use up to five or more calibrators. In addition to die utilizing vacuum and water cooling, templates that utilize only vacuum to control shrinkage may be utilized for calibration, again, depending on application, desired finished profile, etc.

The addition of the CFA creates a significant change in the specific gravity of the material in the finished part. In one embodiment using a polyolefin base polymer with natural fiber and processed carpet waste as the composite material, a specific gravity of approximately 0.75 can be achieved, if a foaming agent is used. Without the foaming agent, a composite material made with the same components has a specific gravity of approximately 1.10. Similarly, a composite consisting of a PVC base polymer and processed carpet waste can be reduced in specific gravity from approximately 1.4 for the solid composite to approximately 0.6 for the foamed composite.

Tables C-2, C-3, and D-3 depict various examples of extruded foam products utilizing HDPE. In all of these examples, no water absorption tests were performed, but it is expected that under the FCQA Water Absorption Test, absorption amounts of not more than about 15% by weight are obtained after exposure to 30 days of water submersion; amounts of not more than about 17% by weight may also be obtained after exposure to 30 days of boiling water submersion.

### COMPARATIVE EXAMPLE 2

Comparative Example 2 is a WPC manufactured in accordance with known processes, and having an HDPE base mixture, but without the use of recycled carpet waste or CFAs. As can be seen, Comparative Example 2 fails at 2870 N (645 lbf), with a displacement at failure of 5.85 cm (2.303 inches).

**Table C-2: Comparative Example 2**

| | FC | FC |
|---|---|---|
| | 6214A | |
| Material | kg. | % |
| Main Feed | | |
| HDPE Pellet/powder | 83.7 | 31.8 |
| Regrind (pulverized) | 27.9 | 10.6 |
| Regrind (flake | | 0.0 |
| Repro | | 0.0 |
| Lubricant | 15.0 | 5.7 |
| Color | | 2.0 |
| CW-1 | | 0.0 |
| CW-2 | | 0.0 |
| Chemical Foaming Agent | | |
| | | |

| Side Feed | | |
|---|---|---|
| Wood Filler | 136.4 | 51.9 |
| Color | | 0.0 |
| CW-1 | | 0.0 |
| CW-2 | | 0.0 |
| Lubricant | | 0.0 |
| Chemical Foaming Agent | | 0.0 |
| | | |
| Formulation Weight | 262.9 | 100.0 |
| | | |
| Rate, lb/hr. | 453.6 | good |
| | | |
| | | Sg=.85 |
| Stress, MPa | | 21.7 |
| Displacement, cm. | | 5.85 |
| MOE, GPa | | 4.50 |
| Load N. | | 2870 |
| | | |
| Water Absorption, %wt | | |

### COMPARATIVE EXAMPLE 3

Comparative Example 3 depicts a WPC manufactured utilizing HDPE and 2% CFA. As can be seen, the specific gravity of the WPC utilizing CFA is reduced from that of the WPC without the CFA. The use of CFA effects the performance of the product, as indicated by failure at 3213 N (722 lbf)., at a displacement of 4.07 cm (1.604 inches).

**Table C-3: Comparative Example 3**

| | FC | FC |
|---|---|---|
| | 6214A | |
| Material | kg. | % |
| Main Feed | | |
| HDPE Pellet/powder | 83.7 | 36.68 |
| Regrind (pulverized) | 27.9 | 10.2 |
| Regrind (flake | | 0.0 |
| Repro | | 0.0 |
| Lubricant | 15.0 | 5.5 |
| Color | | 0.0 |
| CW-1 | | 0.0 |
| CW-2 | | 0.0 |
| Chemical Foaming Agent | 5.4 | 2.0 |
| | | |

| Side Feed | | |
|---|---|---|
| Wood Filler | 136.4 | 49.8 |
| Color | | 0.0 |
| CW-1 | | 0.0 |
| CW-2 | | 0.0 |
| Lubricant | | 0.0 |
| Chemical Foaming Agent | 5.4 | 2.0 |
| | | |
| Formulation Weight | 273.8 | 98.0 |
| | | |
| Rate, lb/hr. | 453.6 | good |
| | | |
| | | Sg=.85 |
| Stress, MPa | | 16.5 |
| Displacement, cm. | | 4.07 |
| MOE, GPa | | 3.24 |
| Load N | | 3213.7 |
| | | |
| Water Absorption, %wt | | |

### EXAMPLE 3

Example 3 depicts the quantities of compounds required for an exemplary WPC manufactured in accordance with the present invention, with HDPE, 19.8% post-consumer carpet waste, and 1.6% CFA. The anticipated performance characteristics of a product manufactured with this formulation are also depicted. This extruded material should fail at approximately 3115 N (700 lbf), and at a displacement of about 4.06 cm (1.6 inches). Additionally, the specific gravity of the sample is expected to be similar to that of Comparative Example 3.

**Table D-3: Example 3**

| | FC | FC |
|---|---|---|
| | | |
| Material | kg. | % |
| Main Feed | | |
| HDPE Pellet/powder | 83.7 | 24.3 |
| Regrind (pulverized) | 27.9 | 8.1 |
| Regrind (flake | | 0.0 |
| Repro | | 0.0 |
| Lubricant | 17.2 | 5.0 |
| Color | | 0.0 |
| CW-1 | 68.0 | 19.8 |
| CW-2 | | 0.0 |
| Chemical Foaming Agent | 5.4 | 1.6 |
| | | |

| Side Feed | | |
|---|---|---|
| Wood Filler | 136.4 | 39.6 |
| Color | | 0.0 |
| CW-1 | | 0.0 |
| CW-2 | | 0.0 |
| Lubricant | | 0.0 |
| Chemical Foaming Agent | 5.4 | 1.6 |
| | | |
| Formulation Weight | 344.1 | 98.4 |
| | | |
| Rate, lb/hr. | | |
| | | |
| | | Sg=.85 |
| Stress, MPa | | 16.6 |
| Displacement, cm. | | 4.06 |
| MOE, GPa | | 3.2416 |
| Load N. | | 3115 |
| | | |
| Water Absorption, %wt | | |

Table C-4, C-5, and D-4 depicts various examples of extruded foam products utilizing PVC. In all of these examples, no water absorption tests were performed.

### COMPARATIVE EXAMPLE 4

Comparative Example 4 is a WPC manufactured utilizing a PVC compound, but without the use of recycled carpet waste or CFAs. As can be seen, the density of the finished extruded material is 1.3 g/cc.

**Table C-4: Comparative Example 4**

| | FC | FC |
|---|---|---|
| | | |
| Material | kg. | % |
| Main Feed | | |
| PVC Compound (AP2221 E) | 176.9 | 48.1 |
| Lubricant SA 0012 | 2.7 | 0.7 |
| Talc | 10.9 | 3.0 |
| Regrind | 88.5 | 24.1 |
| CW-IP | 0.0 | 0.0 |
| Pine Wood Filler | 88.5 | 24.1 |
| | | |

| Secondary Feed into Main Feed | | |
|---|---|---|
| N/A | | |
| | | |
| Formulation Weight | 367.4 | 100.0 |
| | | |
| Rate, lb./hr. | | |
| | | |
| | | |
| Stress, MPa | 15.2 | |
| Displacement, cm. | | |
| MOE, GPa | 5.66 | |
| Load N | 1201 | |
| Density, g/cc | 1.30 | |
| | | |

### COMPARATIVE EXAMPLE 5

Comparative Example 5 depicts a WPC manufactured utilizing PVC compound and endothermic and exothermic CFAs of 0.8% and 0.5%, respectively. As can be seen, the specific gravity of the WPC utilizing CFAs is reduced from that of the WPC without CFAs by about 50%.

**Table C-5: Comparative Example 5**

| | FC | FC |
|---|---|---|
| | | |
| Material | kg. | % |
| Main Feed | | |
| PVC Compound | 69.1 | 98.7 |
| incl. Exothermic CFA 129903-T1 | 0.54 | 0.8 |
| CW-IP | | 0.0 |
| | | 0.0 |

| Secondary Feed into Main Feed | | |
|---|---|---|
| Endothermic CFA 20429-T1 | 0.36 | 0.5 |
| Added separately | | |
| | | |
| Formulation Weight | 70.0 | 100.0 |
| | | |
| Rate, lb./hr. | | |
| | | |
| | | |
| Stress, MPa | 30.8 | |
| Displacement, cm. | | |
| MOE, GPa | 1.21 | |
| Load N | 1121 | |
| Density, g/cc | 0.68 | |
| | | |

### CAPSTOCK PROCESSES AND CAPSTOCKED COMPOSITES

Another aspect of the extrusion of composites containing processed carpet waste is the addition of a "capstock" during the extrusion process. A capstock is a polymeric coating that is applied to one or more sides of the extruded profile, so as to provide improved or altered physical properties on the surface of the extruded part. The capstock is a thermoplastic material compatible with the polymers in the core extrusion, allowing a bonding of the core and the capstock. The coating is coextruded with the main extrusion as part of the forming of the finished extruded profile. The purpose of this extrusion technique is to give the surface of the extruded product particular physical properties (e.g., abrasion resistance or slip resistance), and/or alternative decorating possibilities. The thickness of a capstock may be about 50.8 µm (0.002 inches) to about 1016 µm (0.04 inches). Capstock thickness of about 254 µm (0.01 inches) are typical for certain embodiments. Table A-4 depicts settings for a coextruder used to produce capstock on a PVC core material.

The method of coating an extruded product with a thermoplastic material during the extrusion process is referred to as "capping" or "capstocking." This specific process is accomplished by co-extruding the capstock onto the core material in the forming die. As the composite material is passing through the die, a second extruder pushes a thermoplastic material into the die and subsequently, this capstock material flows around the core to give a coating to the extruded composite product. Methods of applying capstock via coextrusion processes are known by those of ordinary skill in the art.

One purpose of the capstock process is to change the surface of the extruded composite product so that properties such as weatherability, fade resistance, slip resistance and wear resistance can be improved or modified. Composites containing processed carpet waste may also be capstocked, and the process may be applied to both solid and foamed extruded composites. The solid extruded composite products contain 1% to 60% by weight of the processed carpet waste. Extruded composite products that are foamed usually have 1% to 25% by weight processed carpet waste.

The capstock is a thermoplastic material that is compatible with the polymers contained in the solid or foamed composite extrusion. Specific examples for use with PVC-core composites include ASA and PVC compounds. Other thermoplastic materials that are capable of flowing through the capstock die to produce a capstock of the desired thickness may also be used. Whether the core composite is solid or foamed, the capstock is a solid thermoplastic coating.

In any embodiment of the invention utilizing recycled carpet waste, the outer surface of the extruded product may be treated with foil or film laminates. Processes and materials related thereto are disclosed in U.S. Patent Application Serial No. 11/054,258, filed February 9, 2005, and entitled "Foil or Film Laminated Enhanced Natural Fiber/Polymer Composite"; and in U.S. Provisional Patent Application Serial No. 60/641,308, filed January 4, 2005, and entitled "Foil or Film Laminated Enhanced Wood/Polymer Composite".

## Claims

1. A composite building material comprising:
a base polymer selected from the group consisting of polyethylene, HDPE, MDPE, LDPE, LLDPE, polypropylene, PVC, and combinations thereof;
an unseparated processed carpet waste; and
a filler material selected from the group consisting of wood chips, wood flour, wood flakes, sawdust, flax, jute, hemp, kenaf, rice hulls, abaca, and combinations thereof,
wherein the composite building material comprises the base polymer, the unseparated processed carpet waste, and the filler material in a substantially homogeneous mixture, **characterized in that** the composite building material is extruded and the unseparated processed carpet waste comprises a combination of fiber with an outer layer or coating of other carpet materials having lower melting points.

2. The extruded building material composite of claim 1, further comprising a foaming agent to produce an extruded foamed composite building material.

3. The extruded composite building material of claim 1, wherein the unseparated processed carpet waste includes a material selected from the group consisting of wool, nylon, polyester, polypropylene, jute, sisal, and combinations thereof.

4. The extruded composite building material of claim 1, further comprising an additive selected from the group consisting of a colorant, a lubricant, a flame retardant, a compatiblizer, a coupling agent, a mold inhibitor, and combinations thereof.

5. The extruded composite building material of claim 1, wherein the extruded composite building material comprises about 1 % to about 60 % processed carpet waste, by weight, or wherein the composite comprises about 10 % to about 40 % processed carpet waste, by weight; or wherein the composite comprises about 15 % to about 25 % processed carpet waste, by weight.

6. The extruded composite building material of claim 1, wherein the extruded composite building material comprises a ratio of the base polymer to the filler material of about 40:60 to about 60:40, and preferably wherein the ratio is about 45:55.

7. The extruded composite building material of claim 1, wherein the unseparated processed carpet waste comprises at least one of post-industrial waste and post-consumer waste.

8. The extruded composite building material of claim 1, wherein after exposure to 30 days of boiling water submersion testing according to FCQA Water Absorption Test, the extruded composite building material exhibits water absorption of not more than about 7.0 %, by weight; or wherein after exposure to 30 days of boiling water submersion testing according to FCQA Water Absorption Test, the composite exhibits water absorption of not more than about 10.0 %, by weight.

9. The extruded foamed composite building material of claim 2, wherein after exposure to 30 days of boiling water submersion testing according to FCQA Water Absorption Test, the composite exhibits water absorption of not more than about 15.0 %, by weight; or wherein after exposure to 30 days of boiling water submersion testing according to FCQA Water Absorption Test, the composite exhibits water absorption of not more than about 17.0 %, by weight.

10. The extruded composite building material of claim 1, wherein the unseparated processed carpet waste comprises at least one of a pelletized carpet waste and a powdered carpet waste.

11. The extruded composite building material of claim 1, further comprising a capstock.

12. The extruded composite building material of claim 11, wherein:-
(i) the capstock is selected from the group consisting of acrylonitrile-styrene-acrylate, a PVC compound, and a thermoplastic material; or
(ii) the capstock comprises a thickness of approximately 50.8 µm (0.002 in.) to approximately 1016 µm (0.04 in); and optionally or preferably wherein the capstock comprises a thickness of approximately 254 µm (0.01 in).

13. A method of manufacturing an extruded composite building material, the method comprising the steps of:
providing an unseparated processed carpet waste comprising a combination of fiber, with an outer layer or coating of other carpet materials having lower melting points;
providing a base polymer selected from the group consisting of polyethylene, HDPE, MDPE, LDPE, LLDPE, polypropylene, PVC, and combinations thereof;
providing a filler material selected from the group consisting of wood chips, wood flour, wood flakes, sawdust, flax, jute, hemp, kenaf, rice hulls, abaca, and combinations thereof;
mixing and heating the base polymer, the unseparated processed carpet waste, and the filler material in an extruder, to produce a mixture comprising a substantially homogeneous extrudable blend; and
extruding the mixture to produce the extruded composite building material.

14. The method of claim 13, further comprising the step of forming a void in the mixture during the extruding step, and optionally or preferably wherein the extruded mixture expands into the void while maintaining a substantially constant predetermined extruded external profile.

15. The method of claim 13, further comprising the step of passing the extruded mixture through a calibrator, and optionally or preferably wherein the passing step controls at least one of a temperature and a pressure differential environment of the extruded mixture to obtain the extruded composite building material.

16. The method of claim 13 further comprising the step of adding a foaming agent to produce an extruded foamed composite building material.

17. The method of claim 16, wherein the foaming agent comprises:-
(i) at least one of an exothermic foaming agent and an endothermic foaming agent; or
(ii) both an exothermic foaming agent and an endothermic foaming agent.

18. The method of claim 16, wherein the base polymer is introduced into the extruder at a first location and the foaming agent is introduced into the extruder at a second location.

19. The method of claim 16, wherein the base polymer and the foaming agent are introduced into the extruder at a first location.

20. The method of claim 13, further comprising the step of coextruding the mixture and a capstock onto at least a portion of the extruded mixture through a die to form an extruded profile, and optionally or preferably further comprising the step of introducing a foaming agent into the extruder.

21. The method of claim 13, further comprising the step of
shredding the unseparated carpet waste; and optionally or preferably further comprising the step of powderizing shredded unseparated carpet waste to obtain the unseparated processed carpet waste.

22. The method of claim 13, wherein the extruder comprises two screws.

23. The method of claim 13, wherein the base polymer is introduced into the extruder upstream of at least one of the unseparated processed carpet waste and the filler material.

24. The method of claim 13, wherein:-
(i) the base polymer and the unseparated processed carpet waste are introduced to the extruder at a common zone; or
(ii) the filler material and the unseparated processed carpet waste are introduced to the extruder at a common zone; or
(iii) wherein the filler material and an additive are introduced to the extruder at a common zone.

## Patentansprüche

1. Verbundstoff für Bauzwecke, umfassend:
ein Basispolymer, das ausgewählt ist aus der Gruppe bestehend aus Polyethylen, HDPE, MDPE, LDPE, LLDPE, Polypropylen, PVC und Kombinationen davon;
ungetrennte, verarbeitete Teppichabfälle; und
einen Füllstoff, der ausgewählt ist aus der Gruppe bestehend aus Holzschnitzeln, Holzmehl, Holzspänen, Sägespänen, Flachs, Jute, Hanf, Kenaf, Reishülsen, Abaca und Kombinationen davon,
wobei der Verbundstoff für Bauzwecke das Basispolymer, die ungetrennten, verarbeiteten Teppichabfälle und den Füllstoff in einer im Wesentlichen homogenen Mischung umfasst, **dadurch gekennzeichnet, dass** der Verbundstoff für Bauzwecke extrudiert ist und die ungetrennten, verarbeiteten Teppichabfälle eine Kombination aus Fasern mit einer Außenschicht oder Umhüllung aus anderen Teppichmaterialien mit niedrigeren Schmelzpunkten umfassen.

2. Extrudierter Verbundstoff für Bauzwecke nach Anspruch 1, ferner ein Schäumungsmittel umfassend zum Erzeugen eines extrudierten, geschäumten Verbundstoffs für Bauzwecke.

3. Extrudierter Verbundstoff für Bauzwecke nach Anspruch 1, wobei die ungetrennten, verarbeiteten Teppichabfälle ein Material beinhalten, das ausgewählt ist aus der Gruppe bestehend aus Wolle, Nylon, Polyester, Polypropylen, Jute, Sisal und Kombinationen davon.

4. Extrudierter Verbundstoff für Bauzwecke nach Anspruch 1, ferner einen Zusatzstoff umfassend, der ausgewählt ist aus der Gruppe bestehend aus einem Farbmittel, einem Gleitmittel, einem Flammverzögerer, einem Verträglichkeitsvermittler, einem Haftvermittler, einem Schimmelverhütungsmittel und Kombinationen davon.

5. Extrudierter Verbundstoff für Bauzwecke nach Anspruch 1, wobei der extrudierte Verbundstoff für Bauzwecke etwa 1 Gew.-% bis etwa 60 Gew.-% verarbeitete Teppichabfälle umfasst oder wobei der Verbundstoff etwa 10 Gew.-% bis etwa 40 Gew.-% verarbeitete Teppichabfälle umfasst; oder wobei der Verbundstoff etwa 15 Gew.-% bis etwa 25 Gew.-% verarbeitete Teppichabfälle umfasst.

6. Extrudierter Verbundstoff für Bauzwecke nach Anspruch 1, wobei der extrudierte Verbundstoff für Bauzwecke ein Verhältnis von Basispolymer zu Füllstoff von etwa 40:60 bis etwa 60:40 umfasst, und wobei das Verhältnis vorzugsweise bei etwa 45:55 liegt.

7. Extrudierter Verbundstoff für Bauzwecke nach Anspruch 1, wobei die ungetrennten, verarbeiteten Teppichabfälle Industrieabfälle und/oder Verbraucherabfälle umfassen.

8. Extrudierter Verbundstoff für Bauzwecke nach Anspruch 1, wobei der extrudierte Verbundstoff für Bauzwecke, nachdem er einer 30-tägigen Eintauchprüfung in siedendem Wasser gemäß einem FCQA-Wasserabsorptionstest unterzogen worden ist, eine Wasserabsorption von nicht mehr als 7,0 Gew.-% zeigt, oder wobei der Verbundstoff, nachdem er einer 30-tägigen Eintauchprüfung in siedendem Wasser gemäß einem FCQA-Wasserabsorptionstest unterzogen worden ist, eine Wasserabsorption von nicht mehr als 10,0 Gew.-% zeigt.

9. Extrudierter, geschäumter Verbundstoff für Bauzwecke nach Anspruch 2, wobei der Verbundstoff, nachdem er einer 30-tägigen Eintauchprüfung in siedendem Wasser gemäß einem FCQA-Wasserabsorptionstest unterzogen worden ist, eine Wasserabsorption von nicht mehr als etwa 15,0 Gew.-% zeigt, oder wobei der Verbundstoff, nachdem er einer 30-tägigen Eintauchprüfung in siedendem Wasser gemäß einem FCQA-Wasserabsorptionstest unterzogen worden ist, eine Wasserabsorption von nicht mehr als 17,0 Gew.-% zeigt.

10. Extrudierter Verbundstoff für Bauzwecke nach Anspruch 1, wobei die ungetrennten, verarbeiteten Teppichabfälle pelletierte Teppichabfälle und/oder pulverisierte Teppichabfälle umfassen.

11. Extrudierter Verbundstoff für Bauzwecke nach Anspruch 1, ferner
ein Capstock-Hüllmaterial umfassend.

12. Extrudierter Verbundstoff für Bauzwecke nach Anspruch 11, wobei
(i) das Capstock-Hüllmaterial ausgewählt ist aus der Gruppe bestehend aus Acrylnitril-Styrol-Acrylat, einer PVC-Verbindung und einem thermoplastischen Material, oder
(ii) wobei das Capstock-Hüllmaterial eine Dicke von etwa 50,8 µm (0,002 Inch) bis etwa 1016 µm (0,04 Inch) umfasst, und das Capstock-Hüllmaterial optional oder bevorzugt eine Dicke von etwa 254 µm (0,01 Inch) umfasst.

13. Verfahren zur Herstellung eines extrudierten Verbundstoff für Bauzwecke, wobei das Verfahren die folgenden Schritte umfasst:
Bereitstellen von ungetrennten, verarbeiteten Teppichabfällen, die eine Kombination aus Fasern mit einer äußeren Schicht oder Umhüllung aus anderen Teppichmaterialien mit niedrigeren Schmelzpunkten umfassen;
Bereitstellen eines Basispolymers, das ausgewählt ist aus der Gruppe bestehend aus Polyethylen, HDPE, MDPE, LDPE, LLDPE, Polypropylen, PVC und Kombinationen davon;
Bereitstellen eines Füllstoffs, der ausgewählt ist aus der Gruppe bestehend aus Holzschnitzeln, Holzmehl, Holzspänen, Sägespänen, Flachs, Jute, Hanf, Kenaf, Reishülsen, Abaca und Kombinationen davon,
Mischen und Erwärmen des Basispolymers, der ungetrennten, verarbeiteten Teppichabfälle und des Füllstoffs in einem Extruder, um eine Mischung zu erzeugen, die ein im Wesentlichen homogenes extrudierbares Gemisch umfasst; und
Extrudieren der Mischung, um den extrudierten Verbundstoff für Bauzwecke zu erzeugen.

14. Verfahren nach Anspruch 13, ferner den Schritt des Ausbildens eines Hohlraums in der Mischung während des Extrusionsschrittes umfassend, und wobei die extrudierte Mischung sich optional oder bevorzugt in den Hohlraum hinein ausdehnt, während sie ein im Wesentlichen konstantes, vorgegebenes extrudiertes Außenprofil beibehält.

15. Verfahren nach Anspruch 13, ferner den Schritt des Leitens der extrudierten Mischung durch
eine Kalibriervorrichtung umfassend, und wobei in dem Schritt des Durchleitens optional oder vorzugsweise
eine Temperatur und/oder eine Druckdifferentialumgebung der extrudierten Mischung so gesteuert wird, dass der extrudierte Verbundstoff für Bauzwecke erhalten wird.

16. Verfahren nach Anspruch 13, ferner den Schritt des Zugebens eines Schäumungsmittels umfassend, um einen extrudierten, geschäumten Verbundstoff für Bauzwecke zu erzeugen.

17. Verfahren nach Anspruch 16, wobei das Schäumungsmittel umfasst:
(i) ein exothermes Schäumungsmittel und/oder ein endothermes Schäumungsmittel; oder
(ii) sowohl ein exothermes Schäumungsmittel als auch ein endothermes Schäumungsmittel.

18. Verfahren nach Anspruch 16, wobei das Basispolymer an einer ersten Stelle in den Extruder eingeführt wird und das Schäumungsmittel an einer zweiten Stelle in den Extruder eingeführt wird.

19. Verfahren nach Anspruch 16, wobei das Basispolymer und das Schäumungsmittel an einer ersten Stelle in den Extruder eingeführt werden.

20. Verfahren nach Anspruch 13, ferner den Schritt des Extrudierens der Mischung und eines Capstock-Hüllmaterials auf mindestens einen Teil der extrudierten Mischung durch eine Düse umfassend, um ein extrudiertes Profil zu bilden, und optional oder bevorzugt ferner den Schritt des Einführens eines Schäumungsmittels in den Extruder umfassend.

21. Verfahren nach Anspruch 13, ferner den Schritt des Zerkleinerns der ungetrennten Teppichabfälle umfassend; und optional oder bevorzugt ferner den Schritt des Pulverisierens von zerkleinerten, ungetrennten Teppichabfällen umfassend, um die ungetrennten, verarbeiteten Teppichabfälle zu erhalten.

22. Verfahren nach Anspruch 13, wobei der Extruder zwei Schnecken umfasst.

23. Verfahren nach Anspruch 13, wobei das Basispolymer stromaufwärts von den ungetrennten, verarbeiteten Teppichabfällen und/oder vom Füllstoff in den Extruder eingeführt wird.

24. Verfahren nach Anspruch 13, wobei:
(i) das Basispolymer und die ungetrennten, verarbeiteten Teppichabfälle in einer gemeinsamen Zone in den Extruder eingeführt werden; oder
(ii) der Füllstoff und die ungetrennten, verarbeiteten Teppichabfälle in einer gemeinsamen Zone in den Extruder eingeführt werden; oder
(iii) wobei der Füllstoff und ein Zusatz in einer gemeinsamen Zone in den Extruder eingeführt werden.

## Revendications

1. Un matériau de construction composite contenant :
un polymère de base sélectionné dans le groupe se composant de polyéthylène, HDPE, MDPE, LDPE, LLDPE, polypropylène, PVC, et des combinaisons de ceux-ci,
des déchets de tapis traités non séparés, et
un matériau de charge sélectionné dans le groupe se composant de copeaux de bois, farine de bois, flocons de bois, sciure, lin, jute, chanvre, kénaf, balles de riz, abaca, et des combinaisons de ceux-ci,
où le matériau de construction composite contient le polymère de base, les déchets de tapis traités non séparés et le matériau de charge dans un mélange sensiblement homogène, **caractérisé en ce que** le matériau de construction composite est extrudé et les déchets de tapis traités non séparés contiennent une combinaison de fibres avec une couche extérieure ou un enrobage d'autres matériaux de tapis possédant des points de fusion plus bas.

2. Le matériau de construction composite extrudé selon la Revendication 1, contenant en outre un agent moussant destiné à produire un matériau de construction composite de mousse extrudé.

3. Le matériau de construction composite extrudé selon la Revendication 1, où les déchets de tapis traités non séparés contiennent un matériau sélectionné dans le groupe se composant de laine, nylon, polyester, polypropylène, jute, sisal, et des combinaisons de ceux-ci.

4. Le matériau de construction composite extrudé selon la Revendication 1, contenant en outre un additif sélectionné dans le groupe se composant d'un colorant, un lubrifiant, un produit ignifuge, un agent de compatibilité, un agent de couplage, un inhibiteur de moisissures, et des combinaisons de ceux-ci.

5. Le matériau de construction composite extrudé selon la Revendication 1, où le matériau de construction composite extrudé contient environ 1% à environ 60% de déchets de tapis traités en poids, ou où le composite contient environ 10% à environ 40% de déchets de tapis traités en poids, ou où le composite contient environ 15% à environ 25% de déchets de tapis traités en poids.

6. Le matériau de construction composite extrudé selon la Revendication 1, où le matériau de construction composite extrudé contient un rapport polymère de base sur matériau de charge d'environ 40:60 à environ 60:40, et de préférence où le rapport est d'environ 45:55.

7. Le matériau de construction composite extrudé selon la Revendication 1, où les déchets de tapis traités non séparés contiennent au moins des déchets parmi des déchets post-industriels et des déchets post-consommation.

8. Le matériau de construction composite extrudé selon la Revendication 1, où après exposition à 30 jours de test d'immersion en eau bouillante conformément au test d'absorption d'eau FCQA, le matériau de construction composite extrudé présente une absorption d'eau ne dépassant pas environ 7,0% en poids, ou où après exposition à 30 jours de test d'immersion en eau bouillante conformément au test d'absorption d'eau FCQA, le composite présente une absorption d'eau ne dépassant pas environ 10,0% en poids.

9. Le matériau de construction composite de mousse extrudé selon la Revendication 2, où après exposition à 30 jours de test d'immersion en eau bouillante conformément au test d'absorption d'eau FCQA, le composite présente une absorption d'eau ne dépassant pas environ 15,0% en poids, ou où après exposition à 30 jours de test d'immersion en eau bouillante conformément au test d'absorption d'eau FCQA, le composite présente une absorption d'eau ne dépassant pas environ 17,0% en poids.

10. Le matériau de construction composite extrudé selon la Revendication 1, où les déchets de tapis traités non séparés contiennent au moins des déchets parmi des déchets de tapis transformés en granulés et des déchets de tapis réduits en poudre.

11. Le matériau de construction composite extrudé selon la Revendication 1, contenant en outre un matériau de type capstock.

12. Le matériau de construction composite extrudé selon la Revendication 11, où
(i) le matériau de type capstock est sélectionné dans le groupe se composant d'acrylonitrile-styrène-acrylate, d'un composé PVC et d'un matériau thermoplastique, ou
(ii) le matériau de type capstock présente une épaisseur d'approximativement 50,8 µm à approximativement 1016 µm, et éventuellement ou de préférence où le matériau de type capstock présente une épaisseur d'approximativement 254 µm.

13. Un procédé de fabrication d'un matériau de construction composite extrudé, le procédé comprenant les opérations suivantes :
la fourniture de déchets de tapis traités non séparés contenant une combinaison de fibres avec une couche extérieure ou un enrobage d'autres matériaux de tapis possédant des points de fusion plus bas,
la fourniture d'un polymère de base sélectionné dans le groupe se composant de polyéthylène, HDPE, MDPE, LDPE, LLDPE, polypropylène, PVC, et des combinaisons de ceux-ci,
la fourniture d'un matériau de charge sélectionné dans le groupe se composant de copeaux de bois, farine de bois, flocons de bois, sciure, lin, jute, chanvre, kénaf, balles de riz, abaca, et des combinaisons de ceux-ci,
le mélange et le chauffage du polymère de base, des déchets de tapis traités non séparés et du matériau de charge dans une extrudeuse de façon à produire un mélange contenant un mélange extrudable sensiblement homogène, et
l'extrusion du mélange de façon à produire le matériau de construction composite extrudé.

14. Le procédé selon la Revendication 13, comprenant en outre l'opération de formation d'un vide dans le mélange au cours de l'opération d'extrusion, et éventuellement ou de préférence où le mélange extrudé se dilate dans le vide tout en conservant un profil externe extrudé prédéterminé sensiblement constant.

15. Le procédé selon la Revendication 13, comprenant en outre l'opération de passage du mélange extrudé au travers d'un calibreur, et éventuellement ou de préférence où l'opération de passage commande au moins un paramètre parmi une température et un environnement à différentiel de pression du mélange extrudé de façon à obtenir le matériau de construction composite extrudé.

16. Le procédé selon la Revendication 13 comprenant en outre l'opération d'ajout d'un agent moussant destiné à produire un matériau de construction composite de mousse extrudé.

17. Le procédé selon la Revendication 16, où l'agent moussant contient :
(i) au moins un agent parmi un agent moussant exothermique et un agent moussant endothermique, ou
(ii) à la fois un agent moussant exothermique et un agent moussant endothermique.

18. Le procédé selon la Revendication 16, où le polymère de base est introduit dans l'extrudeuse au niveau d'un premier emplacement et l'agent moussant est introduit dans l'extrudeuse au niveau d'un deuxième emplacement.

19. Le procédé selon la Revendication 16, où le polymère de base et l'agent moussant sont introduits dans l'extrudeuse au niveau d'un premier emplacement.

20. Le procédé selon la Revendication 13, comprenant en outre l'opération de co-extrusion du mélange et d'un matériau de type capstock sur au moins une partie du mélange extrudé au travers d'un moule de façon à former un profil extrudé, et éventuellement ou de préférence comprenant en outre l'opération d'introduction d'un agent moussant dans l'extrudeuse.

21. Le procédé selon la Revendication 13, comprenant en outre l'opération de :
déchiquetage des déchets de tapis non séparés, et éventuellement ou de préférence comprenant en outre l'opération de réduction en poudre des déchets de tapis non séparés déchiquetés de façon à obtenir les déchets de tapis traités non séparés.

22. Le procédé selon la Revendication 13, où l'extrudeuse comprend deux vis.

23. Le procédé selon la Revendication 13, où le polymère de base est introduit dans l'extrudeuse en amont d'au moins un élément parmi les déchets de tapis traités non séparés et le matériau de charge.

24. Le procédé selon la Revendication 13, où :
(i) le polymère de base et les déchets de tapis traités non séparés sont introduits dans l'extrudeuse au niveau d'une zone commune, ou
(ii) le matériau de charge et les déchets de tapis traités non séparés sont introduits dans l'extrudeuse au niveau d'une zone commune, ou
(iii) où le matériau de charge et un additif sont introduits dans l'extrudeuse au niveau d'une zone commune.
